# EUROPEAN PATENT SPECIFICATION

(11) **EP 3 438 599 B1**
(45) Date of publication and mention of the grant of the patent: **22.01.2020**
(21) Application number: 17774660.9
(22) Date of filing: 23.03.2017
(51) Int. Cl.: G01B 5/20, G01G 19/52

(54) **SURFACE SHAPE MEASURING DEVICE AND SURFACE SHAPE MEASURING METHOD**
OBERFLÄCHENFORMMESSVORRICHTUNG UND OBERFLÄCHENFORMMESSVERFAHREN
DISPOSITIF DE MESURE DE FORME DE SURFACE ET PROCÉDÉ DE MESURE DE FORME DE SURFACE

(30) Priority: 31.03.2016 JP 2016070209
(43) Date of publication of application: 06.02.2019
(73) Proprietor: Tokyo Seimitsu Co., Ltd., Tokyo 192-8515 (JP)
(72) Inventor: MASUTA, Hikaru, Tsuchiura-city Ibaraki 300-0006 (JP)
(74) Representative: Grünecker Patent- und Rechtsanwälte PartG mbB
(86) International application number: PCT/JP2017/011711
(87) International publication number: WO 2017/170119

(56) References cited:
- JP-A- H0 862 031
- JP-A- 2006 125 924
- JP-A- 2013 145 156
- JP-B2- 3 949 910
- US-A1- 2003 006 756
- US-A1- 2006 085 995
- US-A1- 2010 286 941
- US-A1- 2012 185 210

## Description

### {Technical Field}

The present invention relates to a surface shape measuring device and surface shape measuring method, measuring a surface shape of a workpiece.

### {Background Art}

As a surface shape measuring device which measures a surface shape of a workpiece, a roundness measuring device is known, which measures roundness of a columnar or cylindrical workpiece. The roundness measuring device includes: a base; an air bearing which is provided on the base and rotatably supports a body to be rotated (rotated body) on which a workpiece is placed; a motor which rotates the body to be rotated of the air bearing; a column provided on the base; and a detector which is movably supported on the column and detects a displacement of a probe (see PTL 1). In the roundness measuring device, while moving the body to be rotated relatively to the detector in a state where the probe is brought into contact with the workpiece, a displacement of the probe is detected by the detector, and the roundness of the workpiece is measured based on a detection result of the detector.

### {Citation List}

### {Patent Literature}

PTL 1: Japanese Patent Application Laid-Open No. 2003-021142 which is in the same patent family as US 2003/0006756 A1 deals with an air bearing drive system.
US 2006/0085995 A1 provides a device for measuring circularity and a cylindrical shape. The paper relates to a circularity and cylindrical shape measuring device capable of preventing an error, in a measurement, resulting from deflection of the measuring table attributable to the mass of a workpiece mounted on the measuring table.
US 2012/0185210 A1 provides a circularity measuring apparatus and measurement value correcting method for a circularity measuring method.

### {Summary of Invention}

### {Technical Problem}

In a state where a workpiece is placed on a body to be rotated, an air bearing and a base are deformed due to the weight of the workpiece, whereby the rotational precision of the body to be rotated and the parallelism between a rotating axis of the body to be rotated and a column axis are likely to be deteriorated, and therefore, the measuring precision of the roundness, etc., of the workpiece is likely to be deteriorated.

Further, it is necessary that the acceleration/deceleration parameter and the drive stability angle of the motor which rotates the body be set such that the acceleration/deceleration is slowed and the drive stability angle is widened in accordance with the maximum placement capacity of the body to be rotated on which the workpiece is placed. Thus, there is a problem that, even when the light-weight workpiece is measured, long measuring time is required because of the slowed acceleration/deceleration and the widened drive stability angle adapted to the heavy-weight workpiece.

Note that it may be possible to prepare, in advance, several patterns of correction values of measurement data and drive parameters (the acceleration/deceleration parameter and the drive stability angle) of the motor corresponding to the weight of the workpiece. However, in this case, it is necessary for the operator himself to judge the weight of the workpiece and to manually change the correction value and the drive parameter. Thus, the workload on the operator is increased. Further, when making such manual changes, incorrect correction value and drive parameter are likely to be selected. As a result, the measuring precision of the workpiece is likely to be deteriorated.

The present invention has been implemented in light of such circumstances, and an object of the invention is to provide a surface shape measuring device and a surface shape measuring method which can easily improve the measuring precision of a surface shape of a workpiece.

### {Solution to Problem}

The invention provides a surface shape measuring device according to claim 1.

According to the surface shape measuring device, since it is possible to detect the weight of the workpiece, it is possible to correct measurement data of the surface shape of the workpiece in accordance with the weight of the workpiece.

The relative movement unit rotating the workpiece relatively to the detector makes it possible to measure a surface shape, such as roundness, of the workpiece.

The invention also provides a surface shape measuring device are according to claim 4.
It is preferable that the weight detecting device is provided in (a) leg(s) of a base in which the air bearing is provided. This makes it possible to detect the weight of the workpiece without decreasing the stiffness of the body to be rotated, since there is no need to provide the weight detecting device in the body to be rotated. As a result, in a case where the body is rotated, it is possible to prevent the oscillation of the workpiece.

Note that it is contemplated that the weight detecting device is provided in the air bearing so that the weight of the workpiece is detected by the weight detecting device within the air bearing. However, in the case where the weight detecting device is provided in the body to be rotated such as the air bearing in this manner, there is a possibility that the workpiece oscillates due to the low stiffness of the weight detecting device when the body to be rotated is rotated, leading to deterioration of the measuring precision. Therefore, it is desirable that the weight detecting device is provided in a leg.

In addition, the invention provides a surface shape measuring method according to claim 7.

Further, the invention provides a surface shape measuring method according to claim 9.
This method makes it possible to detect the weight of the workpiece without providing the weight sensor. In addition, it is possible to detect the weight of the workpiece using a configuration of an existing surface shape measuring device.

Further embodiments of the invention are provided by the dependent claims.

A surface shape measuring device according to an embodiment of the present invention, further comprising a measurement data generating unit configured to generate measurement data indicating a surface shape of the workpiece and being corrected in accordance with the weight of the workpiece, based on the detection result by the detector and the weight of the workpiece detected by the weight detecting device, makes it possible to improve the measuring precision of a surface shape of a workpiece.

A surface shape measuring device according to an embodiment of the present invention, providing a plurality of the weight detecting devices around an axis of the rotating axis of the body to be rotated, and the surface shape measuring device further comprising a measurement data generating unit configured to generate measurement data indicating a surface shape of the workpiece and being corrected for each of the rotational positions in accordance with the detection result for each of the rotational positions, based on the detection result by the detector and the detection result by the plurality of the weight detecting devices for each rotational position of the body to be rotated, makes it possible to detect a surface shape of the workpiece with high accuracy even if the position of the shape center of a portion of the object to be measured and the position of its center of gravity G are different from one another. Note that it is desirable that the weight detecting devices are provided concentrically around the rotating axis of the body to be rotated at equal spacing.

A surface shape measuring device according to an embodiment of the present invention further including a drive control unit configured to control drive of the relative movement unit based on the weight of the workpiece detected by the weight detecting device and a preset drive parameter of the relative movement unit corresponding to the weight of the workpiece makes it possible to automatically determine (set) a drive parameter corresponding to the weight of the workpiece, and accordingly, it is possible to reduce the workload on the operator and further to prevent setting of incorrect drive parameters. As a result, it is possible to prevent deterioration of measuring precision of a surface shape of a workpiece and also shorten measuring time.

A surface shape measuring method, wherein a surface shape of a workpiece is measured based on a displacement of a probe detected by a detector, while moving the workpiece relatively to the detector in a state where the probe of the detector is brought into contact with the workpiece, the method including: a weight acquiring step of obtaining a weight of the workpiece, and a measurement data generating step of generating measurement data indicating a surface shape of the workpiece and being corrected in accordance with the weight of the workpiece, based on the detection result by the detector and the weight of the workpiece obtained in the weight acquiring step.

### {Advantageous Effects of Invention}

The surface shape measuring device and the surface shape measuring method according to the present invention can easily improve the measuring precision of a surface shape of a workpiece.

### {Brief Description of Drawings}

Figure 1 is a schematic view of a roundness measuring device which measures roundness of a workpiece which is columnar.
Figure 2 is a top view of the roundness measuring device.
Figure 3 is a bottom view of a base of the roundness measuring device when viewed from below.
Figure 4 is a sectional view of an air bearing taken along line 4-4 in Figure 2.
Figure 5 is a partial enlarged view of the air bearing shown in Figure 4.
Figure 6 is a block diagram illustrating a configuration of a data processing device.
Figure 7 is an explanation view illustrating an example of measurement data indicating roundness.
Figure 8 shows explanation views explaining the presence or absence of the execution of correction of the measurement data by the correcting unit in Portion (A) to Potion (C).
Figure 9 is a flowchart illustrating a flow of the roundness measuring process for the workpiece using the roundness measuring device.
Figure 10 shows explanation views explaining a roundness measuring device in the second embodiment of the present invention in Potion (A) and Portion (B).
Figure 11 is an explanation view explaining the displacement of the position of the center of gravity of the workpiece at the time of rotation of the table.
Figure 12 is an explanation view for explaining an example of the detection result by respective weight sensors for respective rotational positions (angles) of the table.
Figure 13 is a flowchart illustrating a flow of the roundness measuring process of the workpiece using the roundness measuring device according to a second embodiment.
Figure 14 is a sectional view of an air bearing of a roundness measuring device according to a third embodiment.
Figure 15 is a graph indicating correlation between a size of a clearance W2 in the air bearing shown in Figure 5 and a weight of the workpiece placed on the table.
Figure 16 shows explanation views for explaining an example of detecting method of the clearance W2 of the air bearing in Portion (A) and Portion (B).
Figure 17 is a block diagram illustrating a configuration of the roundness measuring device according to a fourth embodiment.
Figure 18 is an explanation view for explaining another example of detecting method of the clearance W2 of the air bearing.
Figure 19 is a schematic view of a roundness measuring device according to another embodiment in which the detector is rotated relative to the workpiece.

### {Description of Embodiments}

### <First Embodiment of Roundness Measuring Device>

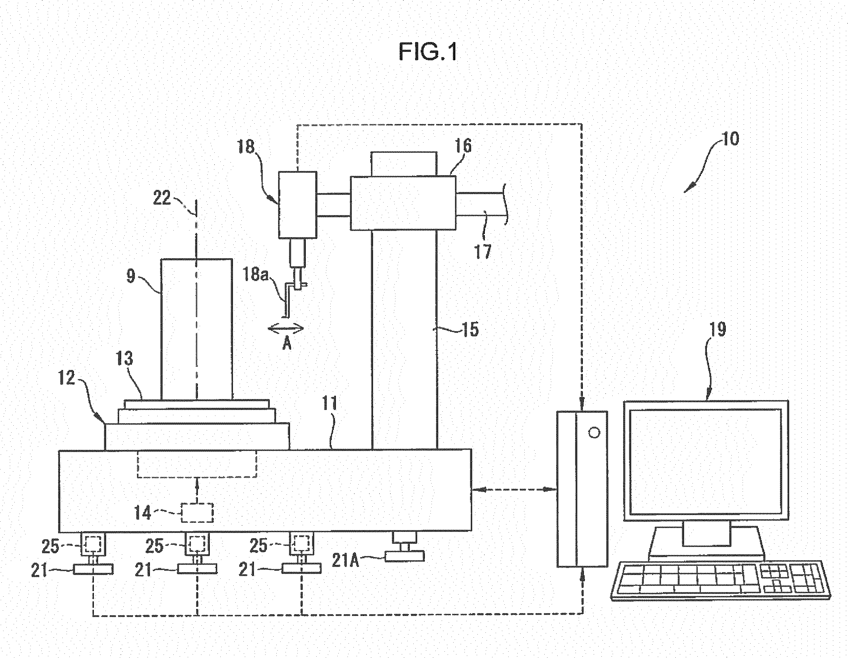

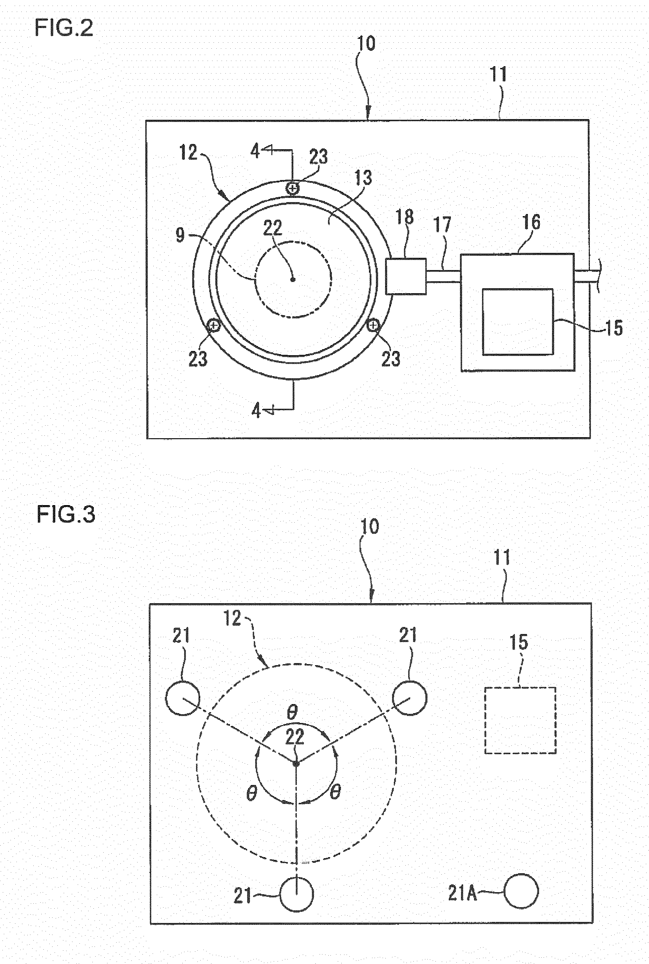

Figure 1 is a schematic view of a roundness measuring device 10 which measures roundness of a workpiece 9 having a columnar shape (or disc shape or cylindrical shape). Figure 2 is a top view of the roundness measuring device 10. The roundness measuring device 10 corresponds to a surface shape measuring device of the present invention.

As shown in Figures 1 and 2, the roundness measuring device 10 includes: a base 11; an air bearing 12; a table 13 (also referred to as a stage); a motor 14; a column 15 (also referred to as a strut); a carriage 16 (also referred to as a slider); a horizontal arm 17; a detector 18; and a data processing device 19. Note that the air bearing 12, the table 13, and the motor 14 constitute a relative movement unit of the present invention.

The base 11 is a support stand (base stand) which supports each section of the roundness measuring device 10 except for the data processing device 19. The air bearing 12 and the column 15 are provided on the upper surface side of the base 11. Further, a motor 14 is provided inside the base 11. Still further, legs 21 and an auxiliary leg 21A which support the base 11 are provided on the lower surface side of the base 11.

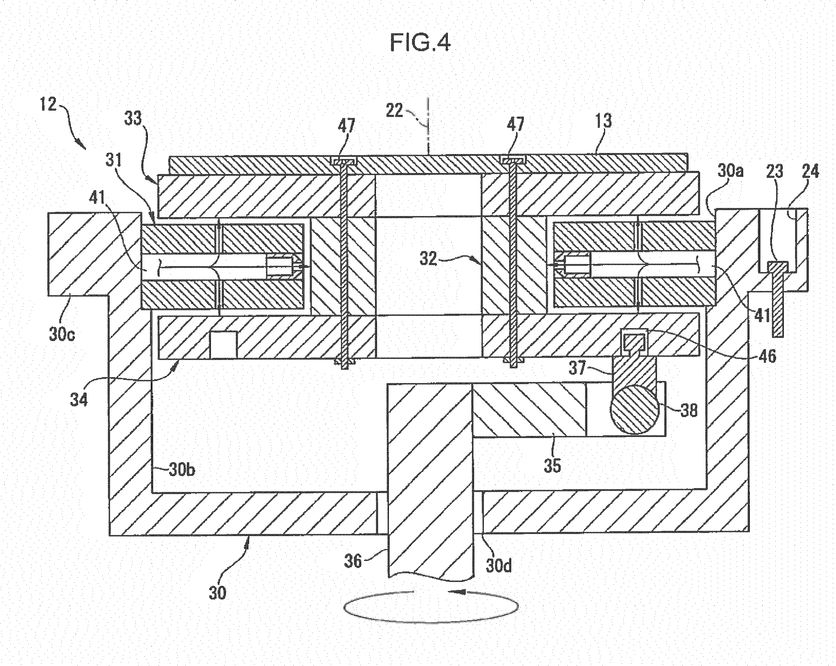

A disc-shaped table 13 is mounted on an upper surface of the air bearing 12. The air bearing 12 supports the table 13 such that the table 13 is rotatable around a rotating axis 22 which passes through a center of the table 13 and is extended in the vertical direction. Insertion holes 24 (see Figure 4) into which bolts 23 are inserted are formed on a circumferential portion of the air bearing 12. The air bearing 12 are fixed to the upper surface of the base 11 with the bolts 23. Note that three insertion holes 24 are formed in the air bearing 12 and are arranged at equal spacing (spacing of 120 degrees) around the rotating axis 22.

The tilt (inclination) of the table 13 is adjusted such that the table is horizontal on the air bearing 12. A workpiece 9 is placed on an upper surface of the table 13. The workpiece 9 is placed on the upper surface of the table 13 such that a shape center (middle) of a portion to be measured coincides (or roughly coincides) with the rotating axis 22 (the same applies hereafter). Note that since the workpiece 9 of the present embodiment has a columnar shape, a position of the shape center and a position of a center of gravity of the workpiece 9 coincide with each other. That is, the workpiece 9 is placed on the upper surface of the table 13 such that the position of the center of gravity of the workpiece 9 coincides with the rotating axis 22.

The motor 14 corresponds to a rotary driving unit of the present invention. The motor 14 rotates the table 13 around the rotating axis 22 via an unillustrated drive transmission mechanism and the air bearing 12. Accordingly, the workpiece 9 rotates around the rotating axis 22 (gravity center axis of the workpiece 9). Note that other rotary driving units other than the motor 14 may be used to rotate the table 13.

The column 15 is provided on the upper surface of the base 11 and on a lateral side in the horizontal direction of the air bearing 12. The column 15 has a shape extended in the vertical direction. The carriage 16 is attached to the column 15 movably in the vertical direction (up-and-down direction).

The horizontal arm 17 is attached to the carriage 16 movably in the horizontal direction. The detector 18 is attached to the tip of the horizontal arm 17.

The detector 18 has a probe 18a and an unillustrated displacement detecting unit such as a differential transformer. The probe 18a is displaced back and forth (moves in X-axis direction in Figure 1) along a detection direction indicated by a straight line A. The detector 18 detects the displacement of the probe 18a and outputs a displacement detection signal (electrical signal) indicating the displacement, to the data processing device 19.

In the case where roundness measurement of a workpiece 9 is carried out, the carriage 16 and the horizontal arm 17 are driven such that the probe 18a is brought into contact with a measuring position of the workpiece 9 (outer peripheral surface in this embodiment). Next, the detector 18 obtains a displacement detection signal from the probe 18a while rotating the workpiece 9 through the air bearing 12 and the table 13 by the motor 14, and then, outputs the displacement detection signal for one rotation of the workpiece 9 to the data processing device 19.

Figure 3 is a bottom view of the base 11 when viewed from below. As shown in Figure 3, the lower surface of the base 11 is provided with three legs 21 which are arranged concentrically around the rotating axis 22 at equal spacing θ (θ = 120 degrees). The auxiliary leg 21A is provided at a position remote (apart) from each of these legs 21. The auxiliary leg 21A prevents the base 11 from falling down when the balance of the base 11 is lost, and is usually lifted in the air. Each of the legs 21 supports each part of the roundness measuring device 10 and a workpiece 9 placed on the table 13, except for the data processing device 19. Note that if the respective legs 21 can stably maintain the base 11 in a horizontal posture by themselves, the auxiliary leg 21A may be omitted.

Returning to Figure 1, each of the legs 21 is provided with a weight sensor 25 which detects the weight applied to the leg 21. The weight sensors can be reset to zero, and detect a further weight applied to the legs 21 from a state where the weighty sensors are reset to zero. With this configuration, each of the weight sensors 25 is reset to zero before the workpiece 9 is placed on the table 13, and thereafter, by placing the workpiece 9 on the table 13, each of the weight sensors 25 can detect the weight of the workpiece 9. That is, each of the weight sensors 25 corresponds to a weight detecting device of the present invention. Further, each of the weight sensors 25 outputs a weight detection signal which indicating the weight applied to each of the legs 21, to the data processing device 19.

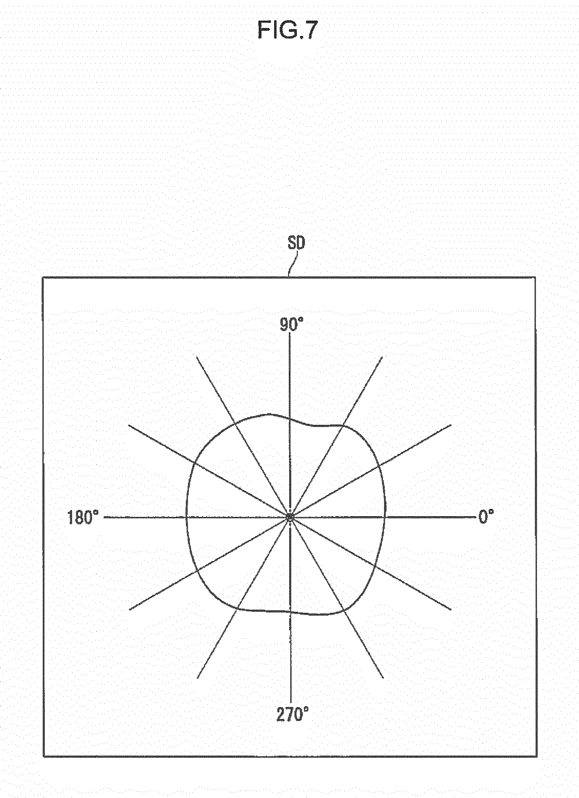

The data processing device 19 is a computing device such as, for example, a personal computer, and processes (analyzes) the displacement detection signal inputted from the detector 18 and then generates measurement data SD (see Figure 7) indicating the roundness of the workpiece 9. In this stage, the data processing device 19 detects (obtains) the weight of the workpiece 9 based on the weight detection signal inputted from each of the weight sensors 25 and then generates corrected measurement data SD according to the weight of the workpiece 9.

Further, the data processing device 19 totally controls drive of each part of the roundness measuring device 10 such as the motor 14, the carriage 16, and the horizontal arm 17, etc. Furthermore, based on the detection result of the weight of the workpiece 9, the data processing device 19 performs drive control of the motor 14 correspondingly to the weight of the workpiece 9.

### <Configuration of Air Bearing>

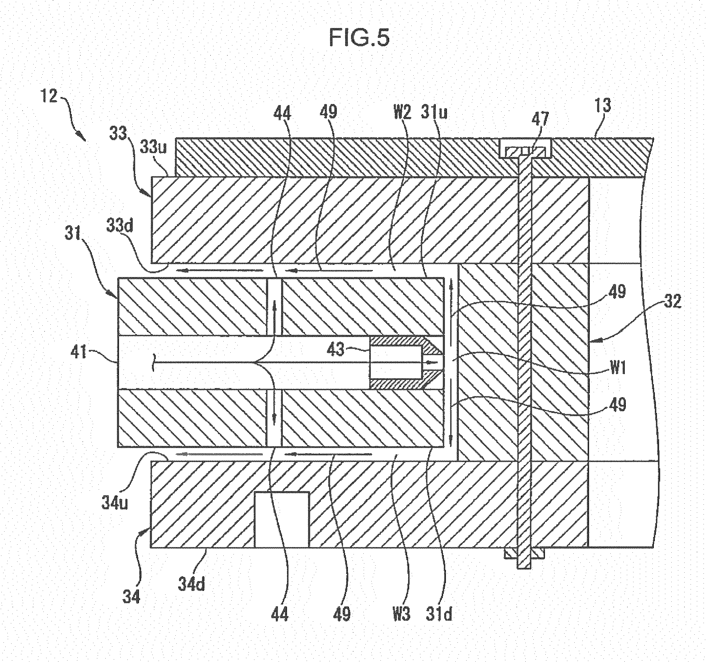

Figure 4 is a sectional view of the air bearing 12 taken along line 4-4 of Figure 2. Figure 5 is a partial enlarged view of the air bearing 12 shown in Figure 4. As shown in Figures 4 and 5, the air bearing 12 is provided with a case 30, a stator 31 (support portion), a rotor 32, an upper plate 33, a lower plate 34, a carrier 35, a torque transmission shaft 36, a carrier pin 37, and a ball 38.

The case 30 is formed in a bottomed cylindrical shape, and includes an opening portion 30a formed on the upper surface side and a housing chamber 30b to house each part of the air bearing 12. Further, on an upper portion of an outer peripheral surface of the case 30, a mounting section 30c having an annular shape is formed. The three insertion holes 24 mentioned above are formed in the mounting section 30c. Further, a through hole 30d through which the torque transmission shaft 36 is passed, is formed on a bottom center of the case 30.

The stator 31 is formed in an annular shape and is fixed to the inner surface side of the opening portion 30a of the case 30. The cylindrical rotor 32 is passed through an inner peripheral side opening portion of the stator 31. Further, the stator 31 includes an upper surface 31u and a lower surface 31d, both surfaces being perpendicular to the rotating axis 22 (see Figure 5). The upper surface 31u and the lower surface 31d correspond to the first surface of the present invention.

Inside the stator 31, an air passage 41 is formed, and air supplied from an outer air supply source (not shown) flows through the air passage 41. Further, a plurality of blowout ports 43 (see Figure 5) are formed on an inner peripheral surface of the stator 31, and air in the air passage 41 (designated by arrow in the figure) is blown out from the blowout ports toward the rotor 32. Furthermore, a plurality of blowout ports 44 (see Figure 5) are formed on the upper surface 31u and the lower surface 31d of the stator 31, and air in the air passage 41 is blown out from the blowout ports 44.

The outer diameter of the rotor 32 is formed smaller than the inner diameter of the stator 31. Accordingly, a clearance W1 (see Figure 5) is formed between the inner peripheral surface of the stator 31 and the outer peripheral surface of the rotor 32. Further, the length of the rotor 32 in the vertical direction is formed longer than the length of the stator 31 in vertical direction. Accordingly, the upper surface of the rotor 32 is located above the upper surface 31u of the stator 31 and the lower surface of the rotor 32 is located below the lower surface 31d of the stator 31. Further, the upper plate 33 is provided on the rotor 32 upper surface and the lower plate 34 is provided on the lower surface of the rotor 32.

Both of the upper plate 33 and the lower plate 34 are formed in an annular shape. The inner diameters of the upper plate 33 and the lower plate 34 are formed same (or substantially same, hereinafter the same applies) as the inner diameter of the rotor 32. The outer diameters of the upper plate 33 and the lower plate 34 are formed larger than the inner diameter of the stator 31 and smaller than the inner diameter of the case 30.

The upper plate 33 includes a lower surface 33d perpendicular to the rotating axis 22 (see Figure 5). The lower surface 33d corresponds to the second surface of the present invention. The lower surface 33d is opposite to (faces) the upper surface 31u of the stator 31 and spaced apart from the upper surface 31u by a clearance W2 (see Figure 5). Further, the above-mentioned table 13 is provided on the upper surface 33u of the upper plate 33 (see Figure 5).

The lower plate 34 has an upper surface 34u perpendicular to the rotating axis 22 (see Figure 5). The upper surface 34u corresponds to the second surface of the present invention. The upper surface 34u is opposite to (faces) the lower surface 31d of the stator 31 and spaced apart from the lower surface 31d by a clearance W3 (see Figure 5). An engagement hole 46 (see Figure 4) is formed on the lower surface 34d of the lower plate 34 (see Figure 5) and the carrier pin 37 is engaged with the engagement hole 46.

The table 13, the rotor 32, the upper plate 33, and the lower plate 34 are integrated via fixing pins 47 passing therethrough, and rotate integrally around the rotating axis 22. That is, the table 13, the rotor 32, the upper plate 33, and the lower plate 34 correspond to the body to be rotated of the present invention.

Air blown out from the blowout ports 43, 44 to the respective clearances W1 to W3 form a layer of air 49 in the clearances W1 to W3 (see Figure 5). Thus, the table 13, the rotor 32, the upper plate 33, and the lower plate 34 are rotatably supported relative to the stator 31 via the layer of air 49 and are able to be smoothly rotated around the rotating axis 22.

The carrier (or lathe carrier, or dog, or lathe dog) 35 is rotatably supported by the torque transmission shaft 36 at the lower side of the lower plate 34. The torque transmission shaft 36 is coaxial with the rotating axis 22 and is rotated around the rotating axis 22 by a rotary driving force from the motor 14. Accordingly, the carrier 35 is also rotated around the rotating axis 22.

The carrier pin 37 has a shape extended long in the vertical direction (bar shape parallel to the rotating axis 22). An upper end of the carrier pin 37 is engaged in the engagement hole 46 of the lower plate 34. Further, a lower end of the carrier pin 37 is bonded to the ball 38 which is supported by an outer peripheral portion of the carrier 35. When the torque transmission shaft 36 and the carrier 35 are rotated around the rotating axis 22 by the motor 14, the carrier pin 37 together with the carrier 35 are rotated around the rotating axis 22. As a result, a rotary driving force (torque) of the motor 14 is transmitted through the carrier pin 37 to the lower plate 34. Thus, the table 13, the rotor 32, the upper plate 33, and the lower plate 34 are integrally rotated around the rotating axis 22.

In this way, because the table 13 is driven for rotation (rotationally driven) with a lathe-carrier fashion (lathe-carrier system), it is possible to prevent vibration, etc. from being transmitted from the motor 14 to the table 13.

### <Configuration of Data Processing Device>

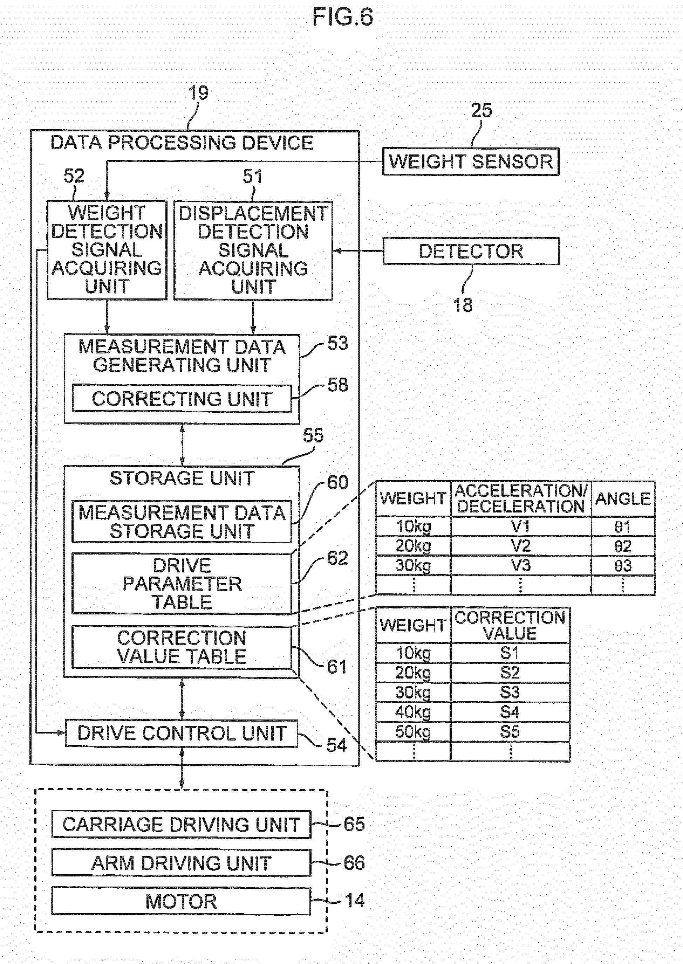

Figure 6 is a block diagram illustrating a configuration of the data processing device 19. As shown in Figure 6, various arithmetic circuits and memories including CPU (central processing unit) or FPGA (field-programmable gate array) of the data processing device 19 function as a displacement detection signal acquiring unit 51, a weight detection signal acquiring unit 52, a measurement data generating unit 53, a drive control unit 54, and a storage unit 55.

The displacement detection signal acquiring unit 51 is a communication interface circuit connected to, for example, the detector 18 via a wired or wireless connection and obtains the displacement detection signal outputted from the detector 18 and then outputs it to the measurement data generating unit 53.

The weight detection signal acquiring unit 52 is a communication interface circuit connected to each of the weight sensors 25 via a wired or wireless connection and obtains weight detection signals outputted from each of the weight sensors 25 and then outputs them to each of the measurement data generating unit 53 and the drive control unit 54. Note that each weight sensor 25 is reset to zero before the placement of the workpiece 9 on the table 13. As such, each weight sensor 25 outputs to the measurement data generating unit 53 a weight detection signal which corresponds to the weight applied to each leg 21 by the workpiece 9.

The measurement data generating unit 53 generates measurement data SD indicating the roundness of the workpiece 9 based on the displacement detection signal obtained from the detector 18 via the displacement detection signal acquiring unit 51.

Figure 7 is an explanation view illustrating an example of measurement data SD indicating the roundness. As shown in Figure 7, the measurement data SD is a record of the displacement amount (amplitude) of the probe 18a at each rotational position (angle) of the table 13. Based on this measurement data SD, it is possible to calculate the roundness of the workpiece 9 which indicates how much the circumferential shape of the workpiece 9 is away from the perfect circle (geometrically correct circle).

Returning to Figure 6, the measurement data generating unit 53 is provided with a correcting unit 58. The correcting unit 58 detects the weight of the workpiece 9 placed on the table 13, by totaling (summing up) weights each detected by each weight sensor 25 based on the weight detection signals obtained from each of the weight sensors 25 via the weight detection signal acquiring unit 52. Then, based on the detection result of the weight of the workpiece 9, the correcting unit 58 corrects an error of the measurement data SD due to the deformation, etc., of the air bearing 12 and the base 11 caused by the weight of the workpiece 9 placed on the table 13, as necessary.

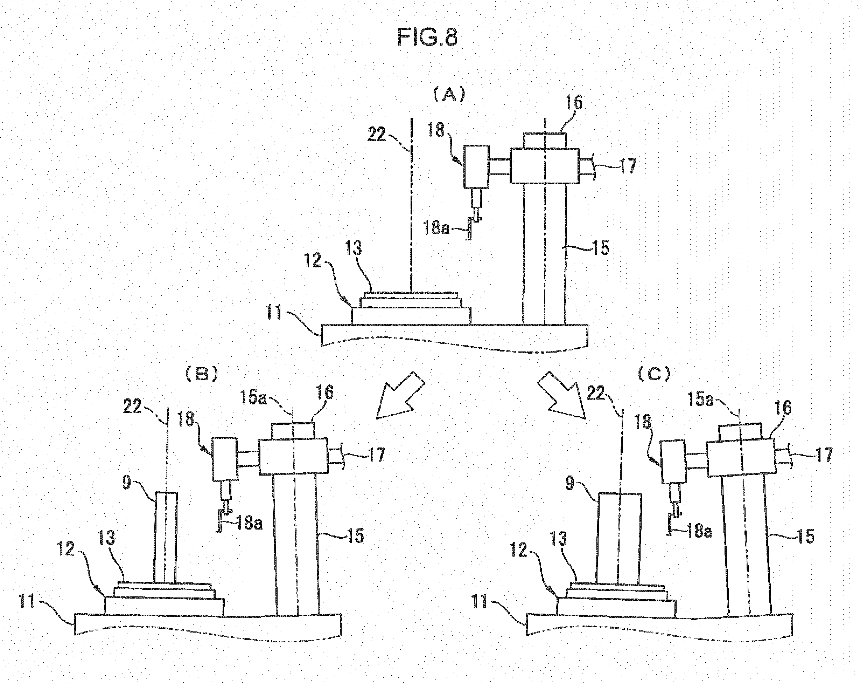

Figure 8 shows explanation views explaining the presence or absence of the execution of correction of the measurement data SD by the correcting unit 58. Portion (A) in Figure 8 illustrates a state in which no workpiece 9 is placed on the table 13. Portion (B) in Figure 8 illustrates a state in which a workpiece 9 whose weight is lighter is placed on the table 13. Portion (C) in Figure 8 illustrates a state in which a workpiece 9 whose weight is heavier is placed on the table 13.

As shown in Portion (A) in Figure 8 and Portion (B) in Figure 8, in a case where the workpiece 9 is lighter in weight, the amounts of deformation of the air bearing 12 and the base 11 are small, which leads to only a small deterioration in rotational precision of the table 13, etc., and a small deterioration in parallelism between the rotating axis 22 and an axis 15a of the column 15. In this case, even if the measurement data SD is not corrected, the measuring precision of roundness measuring is sufficiently ensured. As such, in the case where the weight of the workpiece 9 is less than the preset threshold value, the correction by the correcting unit 58 is omitted, and the roundness measuring can be finished in a short period of time. Note that the threshold value is determined by previously performing a test or simulation for each model of roundness measuring device 10. Then, in the case where the measurement data SD is not corrected, the generated measurement data is stored in a measurement data storage unit 60 (see Figure 6) of the storage unit 55 by the measurement data generating unit 53.

On the other hand, as shown in Portion (C) in Figure 8, in the case where the weight of the workpiece 9 is heavier than the above-mentioned threshold value, the amounts of deformation of the air bearing 12 and the base 11 are increased, whereby the rotational precision of the table 13, etc., is deteriorated and the parallelism between the rotating axis 22 and an axis 15a of the column 15 is also deteriorated. In this case, in order to ensure the measuring precision of roundness measuring, the correcting unit 58 corrects an error of the measurement data SD due to the deformation of the air bearing 12 and the base 11, and so on. At this time, the error of the measurement data SD increases depending on increase of the weight of the workpiece 9, that is, increase of the amount of deformation of the air bearing 12 and the base 11. Therefore, the correcting unit 58 corrects the measurement data SD correspondingly to the weight of the workpiece 9.

Returning to Figure 6, in the case where the weight of the workpiece 9 is heavier than the above-mentioned threshold value, the correcting unit 58 refers to a correction value table 61 previously stored in the storage unit 55 and determines the correction value for correcting the measurement data SD (e.g., amplitude of the probe 18a).

The correction value table 61 stores the correspondence relation between the weight of the workpiece 9 and the correction value of the measurement data SD, according to the weight of the workpiece 9. Note that, for example, the amplitudes of the errors generated in the measurement data SD for each weight of the workpiece 9 can be obtained by previously performing a test or simulation for each model of the roundness measuring device 10, and then, on the basis of the thus obtained result, it is possible to determine the correction value of the measurement data SD. Thus, by referring to the correction value table 61 based on the detected weight of the workpiece 9, the correcting unit 58 is able to determine the correction value of the measurement data SD corresponding to the weight of the workpiece 9. Note that the correction value corresponding to the weight which is not registered in the correction value table 61 is determined by the interpolation processing using the correction value corresponding to the weight which is registered in the correction value table 61.

Then, the correcting unit 58 corrects the measurement data SD generated by the measurement data generating unit 53 based on the correction value determined by referring to the correction value table 61, and then, the corrected measurement data is stored in the measurement data storage unit 60 of the storage unit 55. Note that the correcting unit 58 may collectively correct the measurement data SD for one rotation of the table 13 or may consecutively correct the measurement data SD at each rotational position (angle) of the table 13 in a real-time manner.

The drive control unit 54 controls drive of each part of the roundness measuring device 10 such as the motor 14, a carriage driving unit 65 for driving the carriage 16, and an arm driving unit 66 for driving the horizontal arm 17, etc.

Further, based on the weight detection signals obtained from each of the weight sensors 25 via the weight detection signal acquiring unit 52, the drive control unit 54 detects the weight of the workpiece 9 similarly to the above-mentioned correcting unit 58, and then, determines the drive parameter of the motor 14 by referring to the preset drive parameter table 62 based on the weight of the workpiece 9.

The drive parameter table 62 stores the correspondence relation between the weight of the workpiece 9 and the preset drive parameter of the motor 14 corresponding to the weight of the workpiece 9. The drive parameter includes, for example, an acceleration/deceleration parameter of the motor 14 indicated by "ACCELERATION/DECELERATION" in the figure and a drive stability angle of the motor 14 indicated by "ANGLE" in the figure, and the like. Note that the drive parameter of the motor 14 may include parameters other than the acceleration/deceleration parameter and the drive stability angle.

The drive parameter for each weight of the workpiece 9 can be determined by the test or simulation performed for each model of the roundness measuring device 10. Thus, by referring to the drive parameter table 62 on the basis of the detected weight of the workpiece 9, the drive control unit 54 is able to determine the drive parameter corresponding to the weight of the workpiece 9. Note that the drive parameter corresponding to the weight which is not registered in the drive parameter table 62 is determined by the interpolation processing similarly to the above-mentioned correction value.

The drive control unit 54 controls drive of the motor 14 to rotate the table 13, etc., in accordance with the drive parameter determined by referring to the drive parameter table 62.

The storage unit 55 includes a measurement data storage unit 60 which stores the measurement data SD (including the corrected measurement data SD), and stores the previously generated correction value table 61 and the drive parameter table 62.

### [Operation of Roundness Measuring Device]

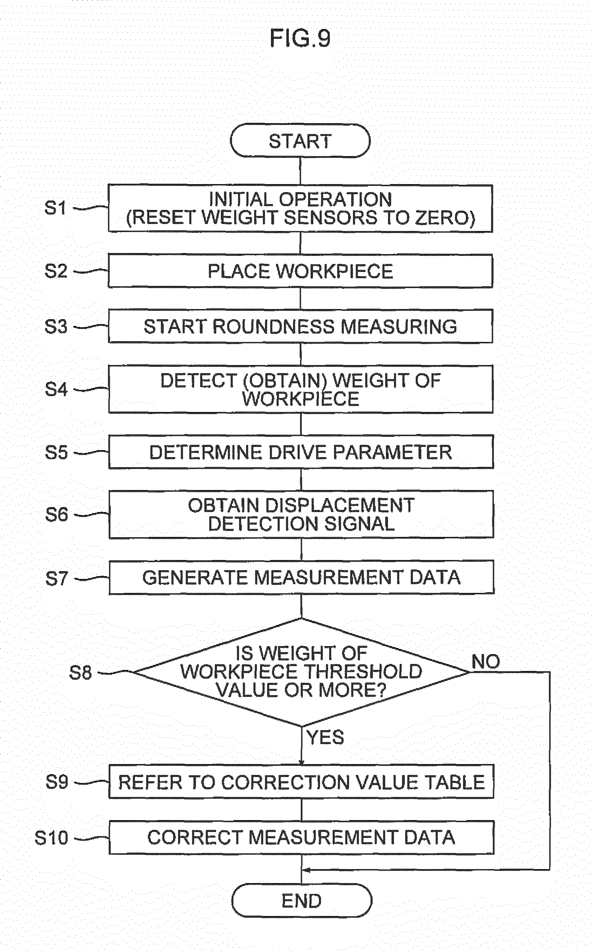

Next, with reference to Figure 9, a roundness measuring process (surface shape measuring method) of a workpiece 9 using the above configured roundness measuring device 10 will be described. Here, Figure 9 is a flowchart illustrating a flow of the roundness measuring process of the workpiece 9 using the roundness measuring device 10.

An operator resets each of the weight sensors 25 to zero as an initial operation (step S1) before placing the workpiece 9 on the table 13. Thereby, it is possible to detect the weight of the workpiece 9 placed on the table 13 by each of the weight sensors 25. Next, the workpiece 9 is placed on the table 13 by the operator (step S2). Note that the workpiece 9 is placed on the table 13 so that the position of the shape center (center of gravity) of the workpiece 9 coincides with the rotating axis 22.

After the workpiece 9 is placed, the operator controls the drive control unit 54 by manual operation (automatic operation also possible) such that the probe 18a of the detector 18 is brought into contact with the measuring surface (outer peripheral surface here) of the workpiece 9. Next, when the operator performs a measurement start operation using the data processing device 19, roundness measurement of the workpiece 9 by the roundness measuring device 10 is started (step S3).

In response to this measurement start operation, each of the weight sensor 25 detects the weight of the workpiece 9 being applied to each leg 21 and then outputs a weight detection signal to the data processing device 19. Then, the weight detecting signal outputted from each of the weight sensors 25 is outputted through the weight detection signal acquiring unit 52 to the drive control unit 54 and to the measurement data generating unit 53, respectively.

At this time, since each of the weight sensors 25 detects the weight of the workpiece 9 at the legs 21, it is possible to detect the weight of the workpiece 9 without providing the weight sensor 25 in the air bearing 12 or table 13. That is, the reduction in stiffness of the air bearing 12 or table 13 due to the weight sensor 25 provided in the air bearing 12 or the table 13 is prevented and thus the oscillation of the workpiece 9 when the table 13, etc., is rotated is prevented. As a result, it is possible to detect the weight of the workpiece 9 with high accuracy.

The drive control unit 54 and the correcting unit 58 of the measurement data generating unit 53 calculates the weight of the workpiece 9 by totaling (summing up) loads applied to e.g., the legs 21, based on the weight detection signals obtained from each of the weight sensors 25. Thus, the drive control unit 54 and the correcting unit 58 can detect (obtain) the weight of the workpiece 9 placed on the table 13 (step S4: corresponding to the weight acquiring step of the present invention).

Then, on the basis of the detected weight of the workpiece 9, by referring to the drive parameter table 62, the drive control unit 54 determines the drive parameter (the acceleration/deceleration parameter and the drive stability angle) of the motor 14 corresponding to the weight of the workpiece 9 (step S5). Accordingly, it is possible to automatically determine (set) the drive parameter of the motor 14 corresponding to the weight of the workpiece 9. Thus, it is possible to reduce the workload on an operator and also to prevent a setting error of the drive parameter. As a result, it is possible to prevent the deterioration of the measuring precision of roundness of the workpiece 9 and to reduce measuring time as well.

Next, the drive control unit 54 drives the motor 14 in accordance with the thus determined drive parameter such that the table 13, the rotor 32, the upper plate 33, and the lower plate 34 are integrally rotated via the torque transmission shaft 36, the carrier 35, and the carrier pin 37. Thus, it is possible for the workpiece 9 to be rotated around the rotating axis 22 relative to the detector 18 in a state where the probe 18a is brought into contact with the workpiece 9.

When rotation of the table 13 and the workpiece 9 is started, the detector 18 detects a displacement detection signal indicating the displacement of the probe 18a and then outputs this displacement detection signal to the data processing device 19. Thus, the measurement data generating unit 53 obtains the displacement detection signal outputted from the detector 18, via the displacement detection signal acquiring unit 51 (step S6). Then, the measurement data generating unit 53 generates measurement data SD indicating the roundness of the workpiece 9, based on the obtained displacement detection signal (step S7).

At this time, based on the detection result of the weight of the workpiece 9, the correcting unit 58 determines whether the weight of the workpiece 9 is the preset threshold value or more. In the case where the weight of the workpiece 9 is less than the preset threshold value, the correcting unit 58 does not correct the measurement data SD and the generated measurement data SD is stored in the measurement data storage unit 60 of the storage unit 55 by the measurement data generating unit 53 (NO in step S8). In the case where correction of the measurement data SD is unnecessary, measuring time for roundness measuring can be shortened by omitting the correction.

On the other hand, in the case where the weight of the workpiece 9 is the preset threshold value or more (YES in step S8), the correcting unit 58 refers to the correction value table 61 in the storage unit 55 based on the detection result of the weight of the workpiece 9, and then determines the correction value for the measurement data SD which corresponds to the weight of the workpiece 9 (step S9). Thus, since it is possible to automatically determine the correction value of the measurement data SD corresponding to the weight of the workpiece 9, it is possible to reduce the workload on the operator and also to prevent the determination of incorrect correction value.

Next, the correcting unit 58 corrects the measurement data SD in accordance with the determined correction value (step S10). Thus, the correcting unit 58 generates the measurement data SD corrected according to the weight of the workpiece 9 (corresponding to the measurement data generating step of the present invention). As a result, it is possible to correct an error of the measurement data SD due to the deformation, etc., of the air bearing 12 and the base 11 generated by the weight of the workpiece 9 placed on the table 13. Therefore, the measuring precision of roundness measurement of the workpiece 9 can be improved. Note that, as already mentioned, the correcting unit 58 may collectively correct the measurement data SD for one rotation of the table 13 or may consecutively correct the measurement data SD at each rotational position (angle) of the table 13 in a real-time manner.

Then, the correcting unit 58 stores the corrected measurement data SD in the measurement data storage unit 60 of the storage unit 55. Note that the measurement data SD stored in the measurement data storage unit 60 is displayed on a monitor of the data processing device 19, as necessary.

### <Effect of Present Embodiment>

As described above, since the roundness measuring device 10 in the present embodiment is provided with the weight sensors 25, the roundness measuring device 10 can detect weight of the workpiece 9 placed on the table 13. Thus, it is possible to generate measurement data SD corrected in accordance with the weight of the workpiece 9 and also possible to drive the motor 14 with the drive parameter set in accordance with the weight of the workpiece 9. As a result, the precision of roundness measurement of the workpiece 9 can easily be improved.

### <Second Embodiment of Roundness Measuring Device>

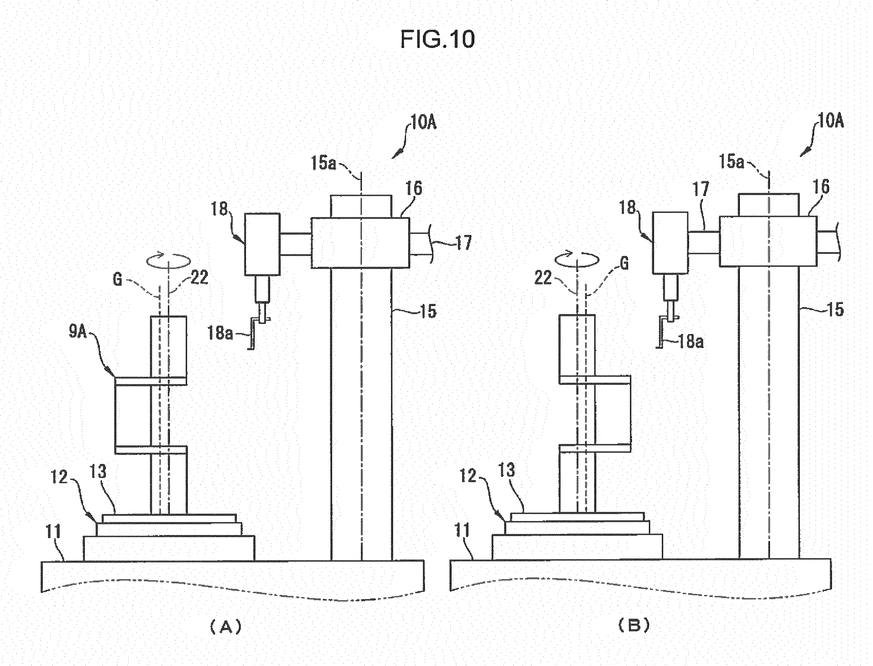

Portion (A) and Portion (B) in Figure 10 are explanation views explaining a roundness measuring device 10A in the second embodiment of the present invention. The roundness measuring device 10 according to the above-mentioned first embodiment, measures the roundness of the columnar workpiece 9 in which the position of the shape center of a measurement objective portion and the position of the center of gravity coincide with each other. In contrast, as shown in Portion (A) and Portion (B) in Figure 10, the roundness measuring device 10A according to the second embodiment measures the roundness of the workpiece 9A having a shape in which the position of the shape center of a measurement objective portion, like, e.g., a crank shaft, is different from the position of the center of gravity G.

Note that the roundness measuring device 10A of the second embodiment has fundamentally the same configuration as that of the roundness measuring device 10 of the first embodiment with the exception that a measurement object is the workpiece 9A. Parts or portions which are functionally or structurally the same as those of the first embodiment are denoted using the same reference numerals, and descriptions thereof are omitted.

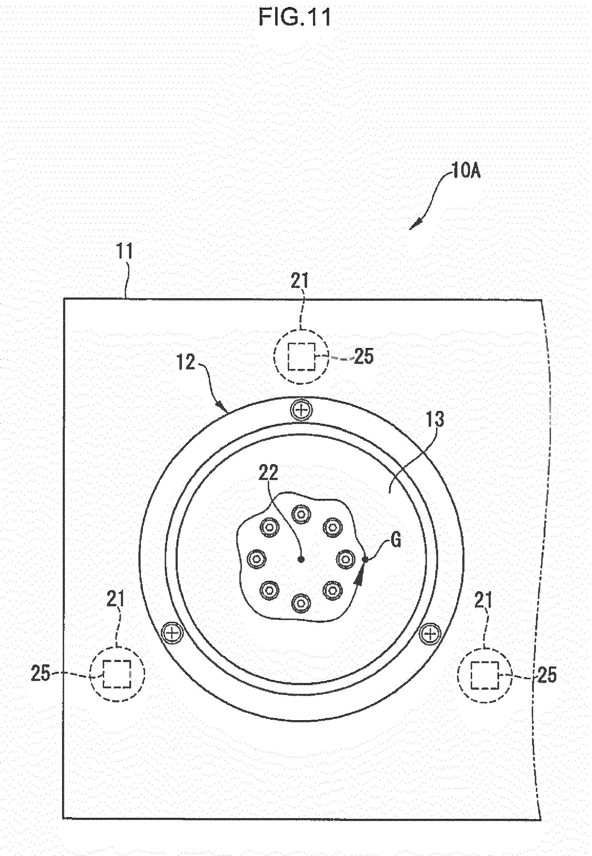

Figure 11 is an explanation view explaining the displacement of the position of the center of gravity G of the workpiece 9A when the table 13 is rotated. As shown in Figure 11, in a state where the workpiece 9A is placed on the table 13 such that the position of the shape center of a measurement objective portion of the workpiece 9A and the rotating axis 22 coincide with each other, when the workpiece 9A is rotated around the rotating axis 22, the position of the center of gravity G of the workpiece 9A is displaced around the axis of the rotating axis 22. In this case, the eccentric position of the center of gravity G relative to the rotating axis 22 changes depending on the rotational position (angle) of the table 13. Accordingly, the deformations of the air bearing 12 and the base 11 also change depending on the rotational position of the table 13. That is, the above-mentioned rotational precision and parallelism, etc., change depending on the rotational position of the table 13.

Thus, the roundness measuring device 10A of the second embodiment generates the measurement data SD corrected according to the eccentric position of the center of gravity G of the workpiece 9A, for each rotational position (angle) of the table 13. That is, the roundness measuring device 10A determines each correction value corresponding to the eccentric position of the center of gravity G of the workpiece 9A for each rotational position of the table 13, and corrects each measurement data SD for each rotational position of the table 13.

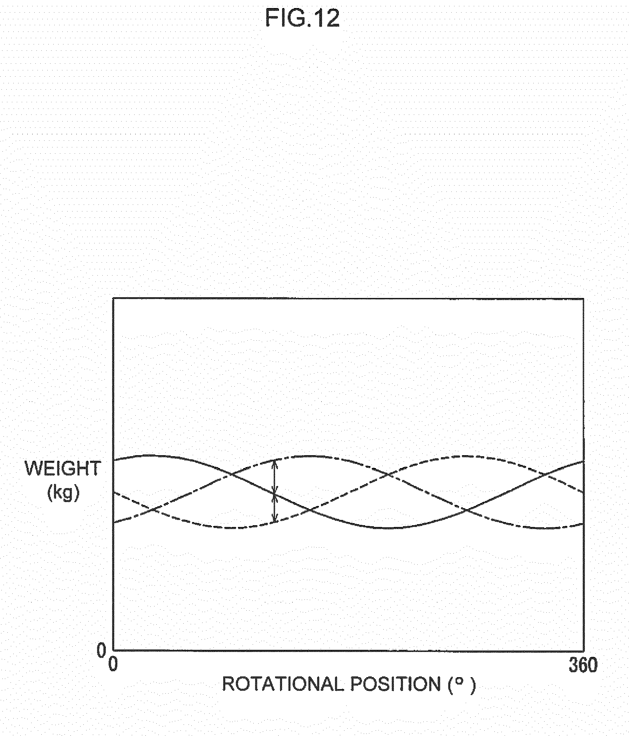

The eccentric position of the center of gravity G of the workpiece 9A for each rotational position (angle) of the table 13 is distinguishable from the detection result of each of the weight sensors 25. As already mentioned and shown in Figure 3, on the lower side of the air bearing 12 in the gravity direction, the weight sensors 25 are each provided concentrically (on the same circumference) around the rotating axis 22 at equal spacing. As such, it is possible to distinguish the eccentric position of the center of gravity G of the workpiece 9A from the balance (see the following Figure 12) of the weight detected by each of the weight sensors 25.

Figure 12 is an explanation view for explaining an example of the detection result of each of the weight sensors 25 for each rotational position (angle) of the table 13. Note that, in Figure 12, the detection results of the three weight sensors 25 are denoted by three kinds of lines: solid line, dashed line, and alternate long and short line.

As shown in Figure 12, in the case where the table 13 is rotated, the eccentric position of the center of gravity G of the workpiece 9A relative to the rotating axis 22 changes depending on the rotational position (angle) of the table 13, and therefore, the weight detected at each of the weight sensors 25 changes in different patterns depending on the rotational position of the table 13. Then, the differences among the weights detected individually at the weight sensors 25 indicate eccentric position (eccentricity direction and eccentric amount) of the center of gravity G of the workpiece 9A relative to the rotating axis 22. That is, the eccentric position of the center of gravity G of the workpiece 9A is distinguished from the balance of the weight detected by each of the weight sensors 25. In other words, the weight detected by each of the weight sensors 25 is information indicating the eccentric position of the center of gravity G of the workpiece 9A.

In the second embodiment, the storage unit 55 stores, instead of the correction value table 61 of the first embodiment, a correction value calculation equation (not shown) for calculating the correction value of the measurement data SD which corresponds to the weight of the workpiece 9A and the eccentric position of the center of gravity G, from the detection result of the weight detected by each of the weight sensors 25. This correction value calculation equation can be determined on the basis of the amplitudes of the errors generated in the measurement data SD according to the weight of the workpiece 9A and the eccentric position of the center of gravity G of the workpiece 9A which are obtained by previously performing a test or simulation for each model of the roundness measuring device 10.

In the second embodiment, based on the weight detected by each weight sensor 25 for each rotational position (angle) of the table 13 and on the correction value calculation equation in the storage unit 55, the correcting unit 58 calculates the correction value of the measurement data SD corresponding to the weight of the workpiece 9A and the eccentric position of the center of gravity G of the workpiece 9A, for each rotational position of the table 13. Then, using the correction value calculated for each rotational position of the table 13, the correcting unit 58 corrects the measurement data SD generated by the measurement data generating unit 53, for each rotational position of the table 13. Thus, the measurement data SD corrected for each rotational position of the table 13 is generated in accordance with the detection result of each weight sensor 25 for each rotational position of the table 13.

Note that other configurations thereof are fundamentally the same as those of the above-mentioned first embodiment, and specific descriptions thereof are omitted.

### <Operation of Roundness Measuring Device of Second Embodiment>

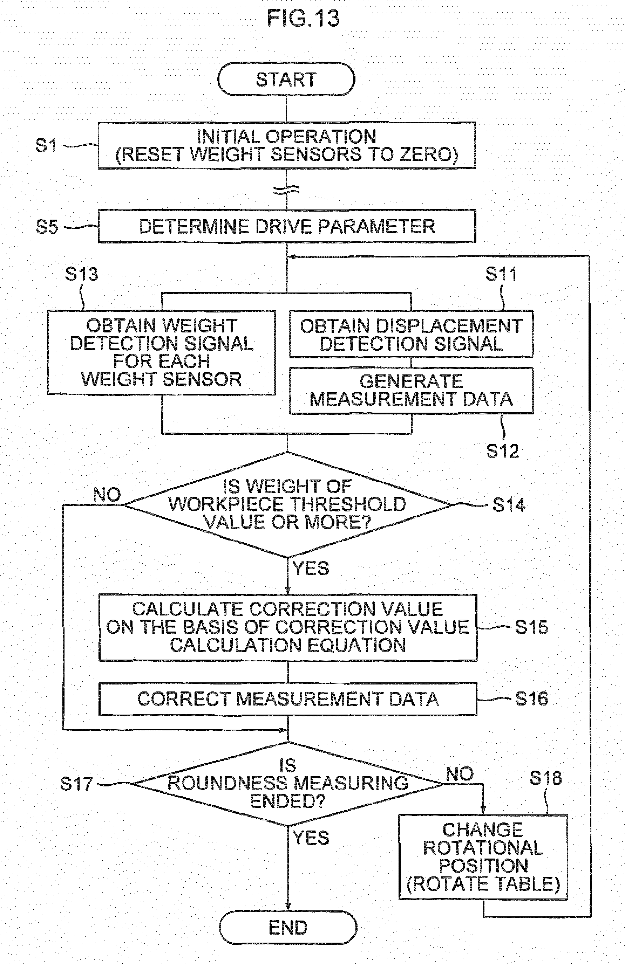

Next, with reference to Figure 13, a roundness measuring process (surface shape measuring method) of the workpiece 9A using the roundness measuring device 10A according to the second embodiment will be described. Here, Figure 13 is a flowchart illustrating a flow of the roundness measuring process of the workpiece 9A using the roundness measuring device 10A according to the second embodiment. Note that the process from step S1 to step S5 is fundamentally the same as the described first embodiment shown in Figure 9, and specific descriptions about these steps are omitted.

After the process of step S5, the drive control unit 54 drives the motor 14 in accordance with the determined drive parameter to rotate the table 13 on which the workpiece 9A is placed, and the like.

When the rotation of the table 13 and the workpiece 9A is started, the detector 18 detects the displacement detection signal indicating the displacement of the probe 18a at the first rotational position (e.g., 1 degree) of the table 13 and then outputs this displacement detection signal to the data processing device 19. Thus, the measurement data generating unit 53 obtains via the displacement detection signal acquiring unit 51 the displacement detection signal at the first rotational position of the table 13 (step S11). Then, on the basis of the obtained displacement detection signal, the measurement data generating unit 53 generates the measurement data SD for first rotational position of the table 13 (step S12).

Further, when the rotation of the table 13 and the workpiece 9A is started, each of the weight sensors 25 detects the weight of the workpiece 9 applied to each of the legs 21 when the table 13 is at the first rotational position, and then outputs the weight detection signal to the data processing device 19 (step S13). At this time, as with the first embodiment, each of the weight sensors 25 detects the weight of the workpiece 9A at a position (more particularly, at the legs 21) lower than the air bearing 12 in the gravity direction. Therefore, it is possible to prevent the oscillation of the workpiece 9A when the table 13 and the like are rotated. As a result, it is possible to more accurately detect the eccentric position of the center of gravity G of the workpiece 9A.

Then, the weight detection signal for the first rotational position of the table 13 outputted from each of the weight sensors 25 is inputted to the measurement data generating unit 53 via the weight detection signal acquiring unit 52. The correcting unit 58 of the measurement data generating unit 53 determines whether the weight of the workpiece 9A obtained in the same manner as the first embodiment is a preset threshold value or more. Then, in the case where the weight of the workpiece 9A is less than the preset threshold value, the correcting unit 58 does not correct the measurement data SD for the first rotational position of the table 13 and the measurement data generating unit 53 stores this measurement data SD in the storage unit 60 (NO in step S14). In the case where correction of the measurement data SD is unnecessary, measuring time for roundness measuring can be shortened by omitting the correction.

On the other hand, in the case where the weight of the workpiece 9 is the preset threshold value or more (YES in step S14), the correcting unit 58 detects the weight applied to each of the legs 21, from the weight detection signal for the first rotational position of the table 13 outputted from each of the weight sensors 25. Then, the correcting unit 58 substitutes each detected weight into the correction value calculation equation in the storage unit 55 to calculate the correction value (step S15). Thus, the correction value of the measurement data SD corresponding to the weight of the workpiece 9A and the eccentric position of the center of gravity G for the first rotational position of the table 13, is calculated.

Next, in accordance with the calculated correction value, the correcting unit 58 corrects the measurement data SD for the first rotational position of the table 13 (step S16). Then, the correcting unit 58 stores the corrected measurement data SD in the measurement data storage unit 60.

Hereinafter, the above-mentioned processes from step S11 to step S16 are repeatedly performed for every rotational position of the table 13 (step S17 and step S18). Thus, the correction value of the measurement data SD corresponding to the weight of the workpiece 9A and the eccentric position of the center of gravity G of the workpiece 9A is calculated for each rotational position of the table 13, and thus, on the basis of each correction value, the measurement data SD corrected for each rotational position of the table 13 is generated.

Thus, in the roundness measuring device 10A of the second embodiment, in the case where the roundness of the workpiece 9A is measured and the position of the shape center of a measurement objective portion and the position of the center of gravity G are different from one another, it is possible to generate the measurement data SD corrected for each rotational position of the table 13 in accordance with the weight detection signal of each weight sensor 25 for each rotational position of the table 13. As a result, the precision of roundness measurement of the workpiece 9A can easily be improved.

### <Third Embodiment of Roundness Measuring Device>

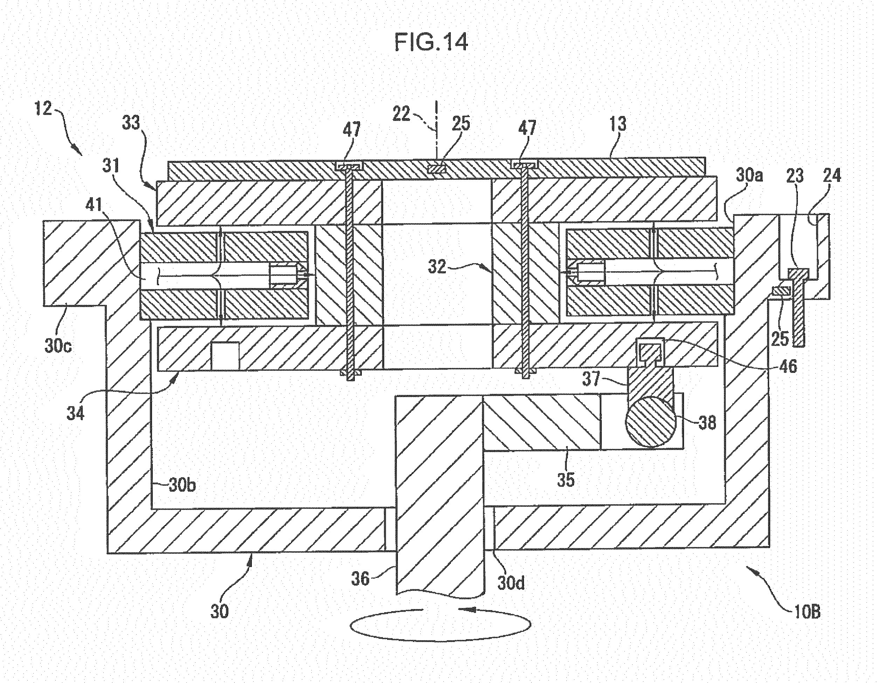

Next, a roundness measuring device 10B (see Figure 14) of the third embodiment of the present invention will be described. In each of the roundness measuring devices 10, 10A of the above-mentioned embodiments, the weight sensors 25 are provided in the legs 21 of the base 11. However, in the roundness measuring device 10B of the third embodiment, the position where the weight sensor 25 is to be provided is changed.

Figure 14 is a sectional view of the air bearing 12 of the roundness measuring device 10B according to the third embodiment. Note that the roundness measuring device 10B according to the third embodiment has fundamentally the same configuration as that of each of the above-mentioned roundness measuring devices 10, 10A according to the first and second embodiments, with the exception that the position at which the weight sensor 25 is provided is changed. Parts or portions which are functionally or structurally the same as those of each of the above-mentioned embodiments are denoted using the same reference numerals, and descriptions thereof are omitted.

As shown in Figure 14, in the roundness measuring devices 10B according to the third embodiment, the weight sensor 25 is provided within the air bearing 12 or within the table 13. As with each of the above-mentioned embodiments, three weight sensors 25 are provided concentrically (on the same circumference) around the rotating axis 22 at equal spacing θ (θ = 120 degrees). Note that the positions of the weight sensors 25 when the weight sensors 25 are provided within the air bearing 12, are not limited to the bottom of the insertion hole 24 shown in Figure 14. The weight sensors 25 may be provided at arbitrary positions within the air bearing 12 as long as the weight of the workpiece 9 is detectable.

In this way, since it is possible to detect the weight of the workpiece 9, 9A placed on the table 13 also in the roundness measuring device 10B of the third embodiment, the same effect as each of the above-mentioned embodiments can be obtained. However, in the case where the weight sensor 25 is provided within the air bearing 12 or the table 13, there is a possibility that the stiffness of the air bearing 12 or the table 13 is reduced and the workpiece 9, 9A oscillates. In order to improve the measuring precision, it is preferable that, as with each of the above-mentioned embodiments, the weight sensors 25 are provided in the legs 21 of the base 11 in which the air bearing 12 is provided.

### <Fourth Embodiment of Roundness Measuring Device>

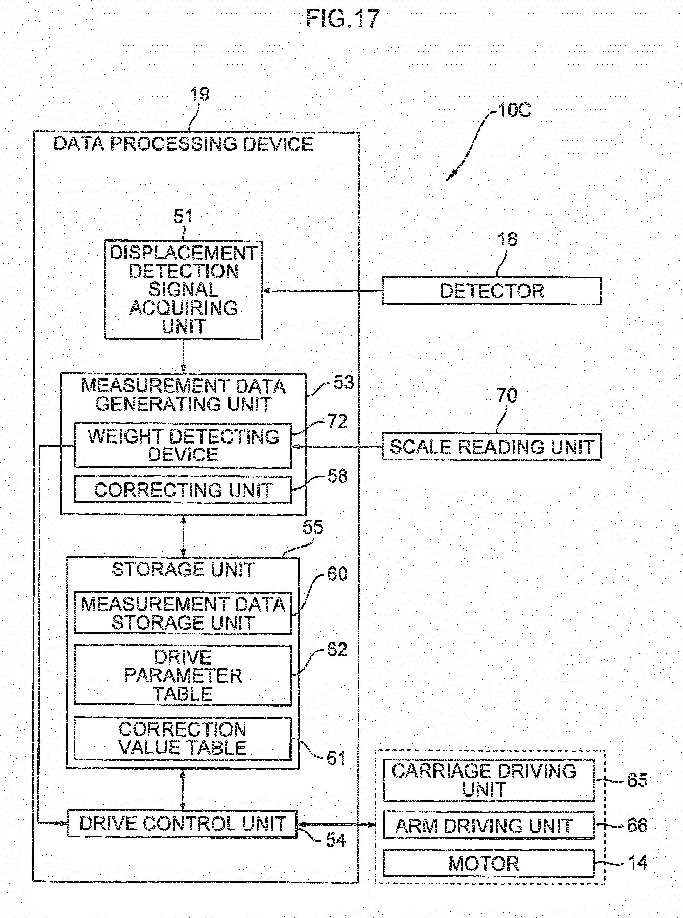

Next, the roundness measuring device 10C (see Figure 17) according to the fourth embodiment of the present invention will be described. In each of the above-mentioned embodiments, the weight of the workpiece 9 (workpiece 9A) placed on the table 13 is detected by the weight sensors 25. However, in the roundness measuring device 10C according to the fourth embodiment, the weight of the workpiece 9 is detected using other methods.

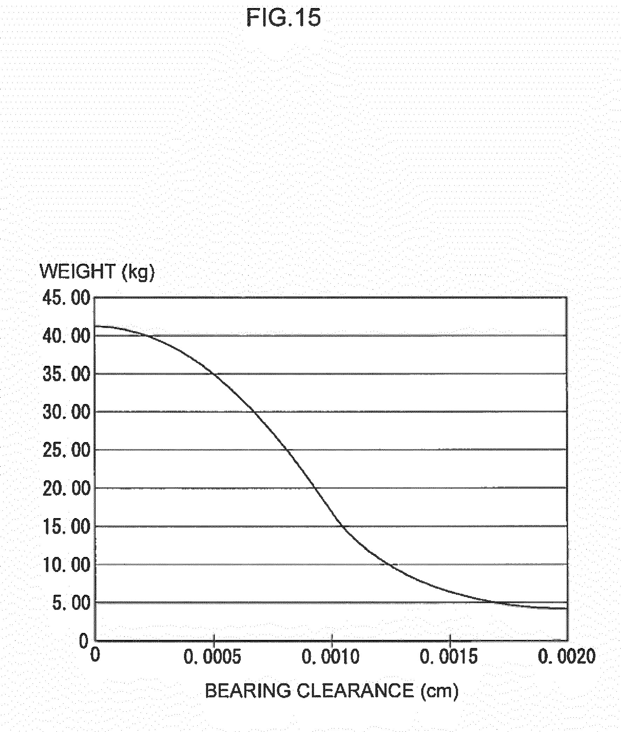

Figure 15 is a graph indicating the correlation between the size of the clearance W2 in the air bearing 12 shown in Figure 5 and the weight of the workpiece 9 placed on the table 13. As shown in Figure 15, the clearance W2 (amount of gap) of the air bearing 12 tends to change depending on the weight of the workpiece 9 placed on the upper side of the air bearing 12, and the clearance W2 is decreased responding to the increase of the weight of the workpiece 9. Thus, by obtaining in advance the correlation between the clearance W2 of the air bearing 12 and the weight of the workpiece 9 as shown in Figure 15, it is possible to calculate the weight of the workpiece 9 from the size of the clearance W2 of the air bearing 12.

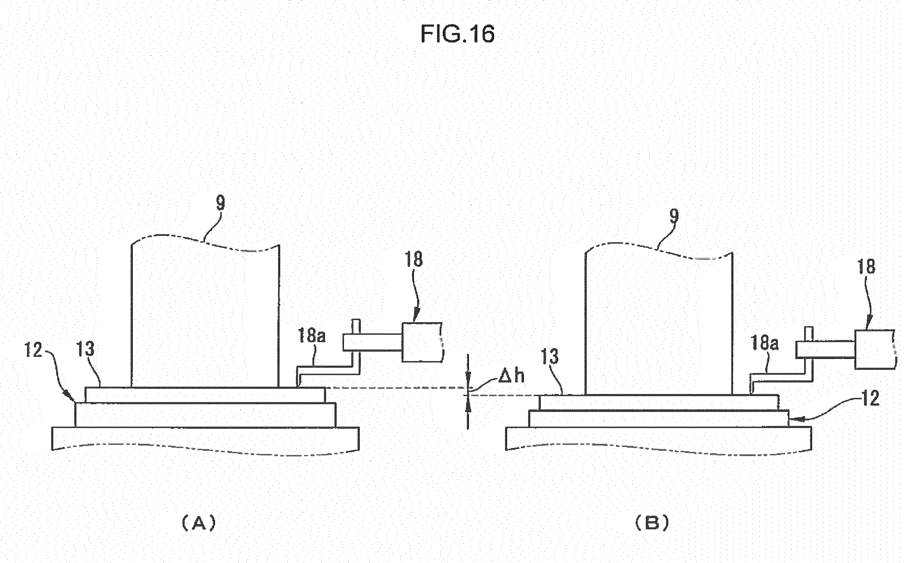

Portion (A) and Portion (B) in Figure 16 are explanation views for explaining one example of detecting method of the clearance W2 of the air bearing 12. As shown in Portion (A) of Figure 16, after the placement of the workpiece 9 on the table 13, in a state where the probe 18a is brought into contact with the upper surface of the table 13, a height position in the vertical direction of the detector 18 (probe 18a) is reset to zero. Note that the height position of the detector 18 is obtained from, for example, a scale reading unit 70 (see Figure 17) for reading a linear scale (not shown) provided in the column 15.

Then, as shown in Portion (B) of Figure 16, after the discharge of air from the air bearing 12, in a state where the probe 18a is again brought into contact with the upper surface of the table 13, the height position in the vertical direction of the detector 18 (probe 18a) is detected. Since the change amount Δh of the height position is equal to the size of the clearance W2 of the air bearing 12 when the workpiece 9 is placed on the table 13, it is possible to detect the size of the clearance W2 without providing the weight sensor 25.

Note that the measurement order of the height position of the detector 18 shown in Portion (A) and Portion (B) in Figure 16 may be reversed. That is, first, in a state where the air is discharged as shown in Portion (B) in Figure 16, the height position of the detector 18 is measured, and thereafter, the height position of the detector 18 may be measured in a state where the air is charged as shown in Portion (A) in Figure 16. In this case, it is possible to quickly start the roundness measurement of the workpiece 9.

Figure 17 is a block diagram illustrating a configuration of the roundness measuring device 10C according to the fourth embodiment. Note that the roundness measuring device 10C according to the fourth embodiment has fundamentally the same configuration as that of the above-mentioned roundness measuring devices 10 of the first embodiment (the same applies to the roundness measuring devices 10A of the second embodiment) with the exception that it is not provided with the weight sensor 25. Parts or portions which are functionally or structurally the same as those of the above-mentioned first embodiment are denoted using the same reference numerals, and descriptions thereof are omitted.

As shown in Figure 17, the measurement data generating unit 53 of the data processing device 19 of the roundness measuring device 10C according to the fourth embodiment is provided with a weight detecting device 72. The weight detecting device 72 obtains from the scale reading unit 70, each of the height positions of the detector 18 indicated by the described Portion (A) and Portion (B) in Figure 16, and then, detects the size of the clearance W2 of the air bearing 12 from the change amount Δh of the height positions. Next, based on the detected size of the clearance W2, the weight detecting device 72 refers to the previously prepared correlation (see Figure 15) between the clearance W2 and the weight of the workpiece 9, and then detects the weight of the workpiece 9 placed on the table 13. Then, the weight detecting device 72 outputs the detection result of the weight of the workpiece 9 to each of the correcting unit 58 and the drive control unit 54.

Other configurations of the roundness measuring device 10C according to the fourth embodiment are fundamentally the same as those of the first embodiment, and therefore, descriptions thereof are omitted.

Thus, the roundness measuring device 10C according to the fourth embodiment can detects the weight of the workpiece 9 (workpiece 9A) placed on the table 13. Therefore, same effects as each of the embodiments are obtained.

In addition, in the roundness measuring device 10C of the fourth embodiment, although the clearance W2 of the air bearing 12 is detected using the detector 18, other methods may be used to detect the clearance W2.

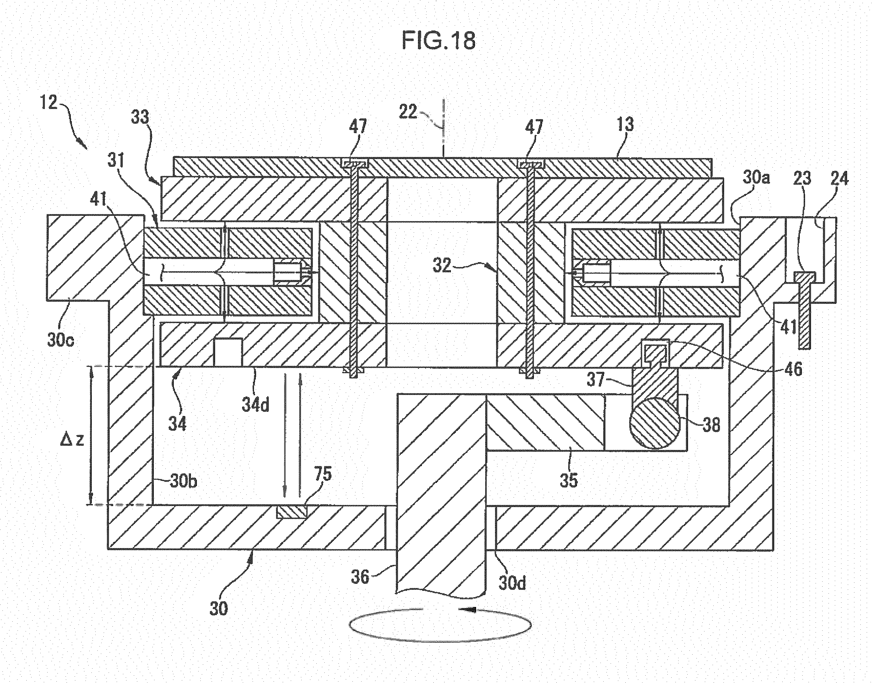

Figure 18 is an explanation view for explaining another example of detecting method of the clearance W2 of the air bearing 12. As shown in Figure 18, a distance sensor 75 using light (noncontact sensor) is provided in the bottom of the housing chamber 30b of the case 30 so that the distance sensor 75 measures a distance Δz between the bottom surface of the housing chamber 30b and the lower surface 34d of the lower plate 34. Then, based on a previously prepared correspondence relation between the distance Δz and the clearance W2, the clearance W2 is calculated from the distance Δz measured by the distance sensor 75. Note that the distance sensor 75 may, instead of being provided in the bottom of the housing chamber 30b, be provided on the lower surface 34d of the lower plate 34.

Further, in this case, the clearance W3 of the air bearing 12 may be detected based on the distance Δz measured by the distance sensor 75, and the previously prepared correspondence relation between the distance Δz and the clearance W3. By obtaining in advance the correlation between the clearance W3 of the air bearing 12 and the weight of the workpiece 9, it is possible to detect the weight of the workpiece 9 also from the detection result of the clearance W3.

### <Others>

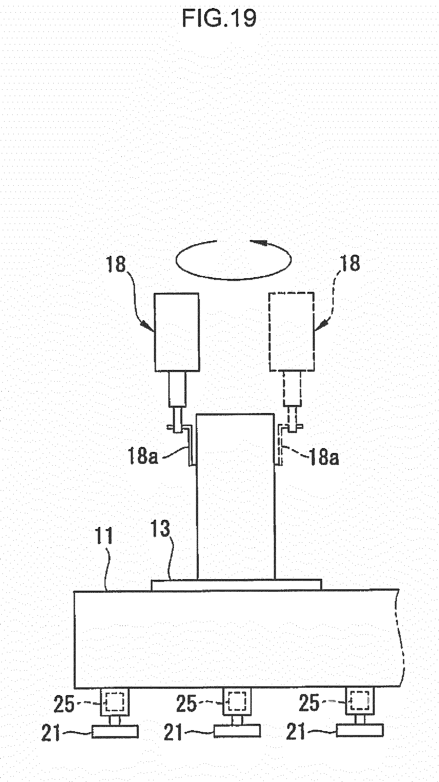

Figure 19 is a schematic view of a roundness measuring device of another embodiment in which the detector 18 is rotated relative to the workpiece 9. In each of the above-mentioned embodiments, the roundness measuring device 10, etc., in which the roundness of the workpiece 9 is measured in a state where the detector 18 is fixed and the workpiece 9 (workpiece 9A) is rotated, has been described as an example. However, the present invention is also applicable to a roundness measuring device in which the roundness of the workpiece 9 is measured in a state where the workpiece 9 is fixed and the detector 18 is rotated around the center axis of the workpiece 9, as shown in Figure 19.

In each of the above-mentioned embodiments, the motor 14 is driven on the basis of the drive parameter of the motor 14 corresponding to the weight of the workpiece 9. However, the pressure of the air bearing 12 may be changed correspondingly to the weight of the workpiece 9, or the flow rate of air in the air bearing 12 may be changed correspondingly to the weight of the workpiece 9. That is, the drive parameter of the present invention includes the pressure of the air bearing 12 and the flow rate of air, etc.

In each of the above-mentioned embodiments, the measurement data SD in which the displacement amount (amplitude) of the probe 18a at each rotational position (angle) of the table 13 is recorded, is corrected. However, the roundness of the workpiece 9 which indicates how much the circumferential shape of the workpiece 9 is away from the perfect circle (geometrically correct circle), may be corrected.

In each of the above-mentioned embodiments, the weight of the workpiece 9, etc., is detected (measured) in the roundness measuring device 10, etc. However, the weight detection signal acquiring unit 52 may obtain the weight of the workpiece 9 measured at a place different from the roundness measuring device 10 and, based on the thus obtained weight of the workpiece 9, the correcting unit 58 may correct the measurement data SD.

In each of the above-mentioned embodiments, the workpiece 9 is supported on the table 13 provided on the upper surface of the air bearing 12. The present invention is applicable also to the case of measuring the workpiece 9 which is supported by various support portions other than the air bearing 12.

In each of the above-mentioned embodiments, as an example of the surface shape measuring device which measures the surface shape of the workpiece, the roundness measuring device 10, etc., which measures the roundness of the workpiece 9 of columnar shape has been described by way of example. The present invention is applicable also to the case of a surface shape measuring device which measures other surface shapes such as, for example, the parallelism and the perpendicularity of the workpiece, or the like. Note that specific examples of measuring other surface shapes such as the parallelism and the perpendicularity are disclosed in, for example, Japanese Patent No. 5116414 of the Applicant and thus the detailed description thereof is omitted. Even in the case of measuring any of surface shapes such as the parallelism and the perpendicularity of a workpiece, by obtaining in advance the correspondence relation between the weight of the workpiece and the correction value of the measurement data corresponding to the weight of the workpiece, it is possible to measure the surface shape of the workpiece with high accuracy, as with each of the above-mentioned embodiments.

Note that in the case of measuring the parallelism and the perpendicularity, etc., of a workpiece, it is not always necessary that the detector is rotated relatively to the workpiece, but the detector may be moved relatively to the workpiece in the vertical direction. That is, the method may be changed to relatively move a detector relative to the workpiece depending on the type of a surface shape of a workpiece to be measured.

### {Reference Signs List}

- 9,9A: workpiece
- 10, 10A, 10B, 10C: roundness measuring device
- 11: base
- 12: air bearing
- 13: table
- 14: motor
- 18: detector
- 18a: probe
- 19: data processing device
- 21: leg
- 22: rotating axis
- 25: weight sensor
- 31: stator
- 32: rotor
- 33: upper plate
- 34: lower plate
- 49: a layer of air
- 51: displacement detection signal acquiring unit
- 52: weight detection signal acquiring unit
- 53: measurement data generating unit
- 54: drive control unit
- 55: storage unit
- 58: correcting unit
- 61: correction value table
- 62: drive parameter table

## Claims

1. A surface shape measuring device (10, 10A, 10B, 10C) comprising:
a detector (18) configured to detect a displacement of a probe (18a);
a base (11); and
a relative movement unit (12, 13, 14) provided in the base (11) and configured to move a workpiece (9, 9A) relatively to the detector (18), the surface shape measuring device (10, 10A, 10B, 10C) configured to measure a surface shape of the workpiece (9, 9A) based on a detection result of a displacement of the probe (18a) detected by the detector (18) while moving the workpiece (9, 9A) relatively to the detector (18) by the relative movement unit (12, 13, 14) in a state where the probe (18a) is brought into contact with the workpiece (9, 9A),
wherein the surface shape measuring device (10, 10A, 10B, 10C) further comprises:
three legs (21) arranged at equal interval on the same circumference around a rotating axis of the relative movement unit (12, 13, 14) on a lower surface of the base (11), the three legs (21) configured to keep a horizontal posture of the base (11); and
weight detecting devices (25) provided respectively to the three legs (21) and configured to detect a weight of the workpiece (9, 9A).

2. The surface shape measuring device (10, 10A, 10B, 10C) according to claim 1,
wherein the relative movement unit (12, 13, 14) comprises:
an air bearing (12) comprising a body to be rotated on which the workpiece (9, 9A) is placed, and a support portion configured to rotatably support the body to be rotated via a layer (49) of air; and
a rotary driving unit (14) configured to rotate the body to be rotated.

3. The surface shape measuring device (10, 10A, 10B, 10C) according to claim 2,
wherein the plurality of weight detecting devices (25) are provided around a rotating axis of the body to be rotated, and
the surface shape measuring device (10, 10A, 10B, 10C) further comprises a measurement data generating unit (53) configured to generate measurement data indicating a surface shape of the workpiece (9, 9A) and being corrected for each of the rotational positions in accordance with the detection result for each of the rotational positions, based on the detection result by the detector (18) and the detection result by the plurality of the weight detecting devices (25) for each rotational position of the body to be rotated.

4. A surface shape measuring device (10, 10A, 10B, 10C) comprising:
a detector (18) configured to detect a displacement of a probe (18a); and
a relative movement unit (12, 13, 14) configured to move a workpiece (9, 9A) relatively to the detector (18), the surface shape measuring device (10, 10A, 10B, 10C) configured to measure a surface shape of the workpiece (9, 9A) based on a detection result of a displacement of the probe (18a) detected by the detector (18) while moving the workpiece (9, 9A) relatively to the detector (18) by the relative movement unit (12, 13, 14) in a state where the probe (18a) is brought into contact with the workpiece (9, 9A),
wherein the surface shape measuring device (10, 10A, 10B, 10C) further comprises a weight detecting device (25) configured to detect a weight of the workpiece (9, 9A),
wherein the relative movement unit (12, 13, 14) comprises:
an air bearing (12) comprising a body to be rotated on which the workpiece (9, 9A) is placed, and a support portion configured to rotatably support the body to be rotated via a layer (49) of air, the layer (49) of air being formed between a first surface which is formed in the support portion and is perpendicular to a rotating axis of the body to be rotated, and a second surface which is formed in the body to be rotated and is opposite to the first surface; and
a rotary driving unit (14) configured to rotate the body to be rotated, and
wherein the weight detecting device (25) is configured to detect the weight of the workpiece (9, 9A) based on a detection result of a size of a clearance between the first surface and the second surface.

5. The surface shape measuring device (10, 10A, 10B, 10C) according to any one of claims 1 to 4, further comprising
a measurement data generating unit (53) configured to generate measurement data indicating a surface shape of the workpiece (9, 9A) and being corrected in accordance with the weight of the workpiece (9, 9A), based on the detection result by the detector (18) and the weight of the workpiece (9, 9A) detected by the weight detecting device (25).

6. The surface shape measuring device (10, 10A, 10B, 10C) according to any one of claims 1 to 5, further comprising
a drive control unit (54) configured to control drive of the relative movement unit (12, 13, 14) based on the weight of the workpiece (9, 9A) detected by the weight detecting device (25) and a preset drive parameter of the relative movement unit (12, 13, 14) corresponding to the weight of the workpiece (9, 9A).

7. A surface shape measuring method, wherein a surface shape of a workpiece (9, 9A) is measured based on a displacement of a probe (18a) detected by a detector (18), while moving the workpiece (9, 9A) relatively to the detector (18) by a relative movement unit (12, 13, 14) provided in a base (11) in a state where the probe (18a) of the detector (18) is brought into contact with the workpiece (9, 9A), a lower surface of the base (11) having three legs (21) arranged at equal interval on the same circumference around a rotating axis of the relative movement unit (12, 13, 14), the three legs (21) configured to keep a horizontal posture of the base (11), the method comprising:
a weight acquiring step of obtaining a weight of the workpiece (9, 9A) by weight detecting devices (25) provided respectively to the three legs (21); and
a measurement data generating step of generating measurement data indicating a surface shape of the workpiece (9, 9A) and being corrected in accordance with the weight of the workpiece (9, 9A), based on the detection result by the detector (18) and the weight of the workpiece (9, 9A) obtained in the weight acquiring step.

8. The surface shape measuring method according to claim 7,
wherein the relative movement unit (12, 13, 14) comprises:
an air bearing (12) comprising a body to be rotated on which the workpiece (9, 9A) is placed, and a support portion configured to support the body to be rotated rotatably around the rotating axis via a layer (49) of air; and
a rotary driving unit (14) configured to rotate the body to be rotated.

9. A surface shape measuring method, wherein a surface shape of a workpiece (9, 9A) is measured based on a displacement of a probe (18a) detected by a detector (18), while moving the workpiece (9, 9A) relatively to the detector (18) by a relative movement unit (12, 13, 14) in a state where the probe (18a) of the detector (18) is brought into contact with the workpiece (9, 9A),
wherein the relative movement unit (12, 13, 14) comprises:
an air bearing (12) comprising a body to be rotated on which the workpiece (9, 9A) is placed, and a support portion configured to rotatably support the body to be rotated via a layer (49) of air, the layer (49) of air being formed between a first surface which is formed in the support portion and is perpendicular to a rotating axis of the body to be rotated, and a second surface which is formed in the body to be rotated and is opposite to the first surface; and
a rotary driving unit (14) configured to rotate the body to be rotated, and
wherein the method comprises:
a weight acquiring step of obtaining a weight of the workpiece (9, 9A) based on a detection result of a size of a clearance between the first surface and the second surface; and
a measurement data generating step of generating measurement data indicating a surface shape of the workpiece (9, 9A) and being corrected in accordance with the weight of the workpiece (9, 9A), based on the detection result by the detector (18) and the weight of the workpiece (9, 9A) obtained in the weight acquiring step.

## Patentansprüche

1. Vorrichtung (10; 10A; 10B; 10C) zum Messen einer Oberflächenform, die umfasst:
einen Detektor (18), der konfiguriert ist, um eine Verschiebung einer Sonde (18a) zu erfassen;
eine Basis (11); und
eine Relativbewegungs-Einheit (12, 13, 14), die sich in der Basis (11) befindet und konfiguriert ist, um ein Werkstück (9, 9A) relativ zu dem Detektor (18) zu bewegen, wobei die Vorrichtung (10, 10A, 10B, 10C) zum Messen einer Oberflächenform konfiguriert ist, um eine Oberflächenform des Werkstücks (9, 9A) basierend auf einem Erfassungsergebnis einer Verschiebung der Sonde (18a) zu messen, die durch den Detektor (18) erfasst wird, während das Werkstück (9, 9A) durch die Relativbewegungs-Einheit (12, 13, 14) relativ zu dem Detektor (18) in einem Zustand bewegt wird, in dem die Sonde (18a) in Kontakt mit dem Werkstück (9, 9A) gebracht wird,
wobei die Vorrichtung (10; 10A; 10B; 10C) zum Messen einer Oberflächenform des Weiteren umfasst:
drei Schenkel (21), die in gleichmäßigem Abstand an dem gleichen Umfang um eine Drehachse der Relativbewegungs-Einheit (12, 13, 14) an einer Unterseite der Basis (11) angeordnet sind, wobei die drei Schenkel (21) konfiguriert sind, um eine horizontale Stellung der Basis (11) beizubehalten; und
Gewichtserfassungs-Vorrichtungen (25), die jeweils an den drei Schenkeln (21) vorgesehen und konfiguriert sind, um ein Gewicht des Werkstücks (9, 9A) zu erfassen.

2. Vorrichtung (10; 10A; 10B; 10C) zum Messen einer Oberflächenform nach Anspruch 1, wobei die Relativbewegungs-Einheit (12, 13, 14) umfasst:
ein Luftlager (12), umfassend einen zu drehenden Körper, an dem das Werkstück (9, 9A) platziert ist, sowie einen Lagerungsabschnitt, der konfiguriert ist, um den zu drehenden Körper über eine Luftschicht (49) drehbar zu lagern; sowie
eine Drehantriebs-Einheit (14), die konfiguriert ist, um den zu drehenden Körper zu drehen.

3. Vorrichtung (10; 10A; 10B; 10C) zum Messen einer Oberflächenform nach Anspruch 2,
wobei die Vielzahl von Gewichtserfassungs-Vorrichtungen (25) um eine Drehachse des zu drehenden Körpers herum vorgesehen ist, und
die Vorrichtung (10; 10A; 10B; 10C) zum Messen einer Oberflächenform des Weiteren eine Einheit (53) zum Erzeugen von Messungsdaten umfasst, die konfiguriert ist, um Messungsdaten zu erzeugen, die eine Oberflächenform des Werkstücks (9, 9A) anzeigen und die für jede der Drehpositionen entsprechend dem Erfassungsergebnis für jede der Drehpositionen auf Basis des Erfassungsergebnisses des Detektors (18) sowie des Erfassungsergebnisses der Vielzahl der Gewichtserfassungsvorrichtungen (25) für jede Drehposition des zu drehenden Körpers korrigiert werden.

4. Vorrichtung (10; 10A; 10B; 10C) zum Messen einer Oberflächenform, die umfasst:
einen Detektor (18), der konfiguriert ist, um eine Verschiebung einer Sonde (18a) zu erfassen; sowie
eine Relativbewegungs-Einheit (12, 13, 14), die konfiguriert ist, um ein Werkstück (9, 9A) relativ zu dem Detektor (18) zu bewegen, wobei die Vorrichtung zum Messen einer Oberflächenform (10, 10A, 10B, 10C) konfiguriert ist, um eine Oberflächenform des Werkstücks (9, 9A) basierend auf einem Erfassungsergebnis einer Verschiebung der Sonde (18a) zu messen, die durch den Detektor (18) erfasst wird, während das Werkstück (9, 9A) durch die Relativbewegungs-Einheit (12, 13, 14) relativ zu dem Detektor (18) in einem Zustand bewegt wird, in dem die Sonde (18a) in Kontakt mit dem Werkstück (9, 9A) gebracht wird,
wobei die Vorrichtung zum Messen einer Oberflächenform (10, 10A, 10B, 10C) des Weiteren eine Gewichtserfassungs-Vorrichtung (25) umfasst, die konfiguriert ist, um ein Gewicht des Werkstücks (9, 9A) zu erfassen,
und die Relativbewegungs-Einheit (12, 13, 14) umfasst:
ein Luftlager (12), umfassend einen zu drehenden Körper, an dem das Werkstück (9, 9A) platziert ist, sowie einen Lagerungsabschnitt, der konfiguriert ist, um den zu drehenden Körper über eine Luftschicht (49) drehbar zu lagern; wobei die Luftschicht (49) zwischen einer ersten Fläche, die an dem Lagerungsabschnitt ausgebildet ist und senkrecht zu einer Drehachse des zu drehenden Körpers ist, und einer zweiten Fläche ausgebildet wird, die an dem zu drehenden Körper ausgebildet ist und der ersten Oberfläche gegenüberliegt; sowie
eine Drehantriebs-Einheit (14), die konfiguriert ist, um den zu drehenden Körper zu drehen, und
wobei die Gewichtserfassungs-Vorrichtung (25) konfiguriert ist, um das Gewicht des Werkstücks (9, 9A) basierend auf einem Erfassungsergebnis einer Größe eines Abstandes zwischen der ersten Fläche und der zweiten Fläche zu erfassen.

5. Vorrichtung (10; 10A; 10B; 10C) zum Messen einer Oberflächenform nach einem der Ansprüche 1 bis 4, die des Weiteren
eine Einheit (53) zum Erzeugen von Messungsdaten umfasst, die konfiguriert ist, um Messungsdaten zu erzeugen, die eine Oberflächenform des Werkstücks (9, 9A) anzeigen und die entsprechend dem Gewicht des Werkstücks (9, 9A) auf Basis des Erfassungsergebnisses des Detektors (18) sowie des durch die Gewichtserfassungs-Vorrichtung (25) erfassten Gewichtes des Werkstücks (9, 9A) korrigiert werden.

6. Vorrichtung (10; 10A; 10B; 10C) zum Messen einer Oberflächenform nach einem der Ansprüche 1 bis 5, die des Weiteren
eine Antriebssteuerungs-Einheit (54) umfasst, die konfiguriert ist, um Antrieb der Relativbewegungs-Einheit (12, 13, 14) basierend auf dem durch die Gewichtserfassungs-Vorrichtung (25) erfassten Gewicht des Werkstücks (9, 9A) und einem voreingestellten Antriebs-Parameter der Relativbewegungs-Einheit (12, 13, 14) entsprechend dem Gewicht des Werkstücks (9, 9A) zu steuern.

7. Verfahren zum Messen einer Oberflächenform, mit dem eine Oberflächenform eines Werkstücks (9, 9A) basierend auf einer Verschiebung einer Sonde (18a) gemessen wird, die von einem Detektor (18) erfasst wird, während das Werkstück (9, 9A) durch eine in einer Basis (11) vorhandene Relativbewegungs-Einheit (12, 13, 14) relativ zu dem Detektor (18) in einem Zustand bewegt wird, in dem die Sonde (18a) des Detektors (18) in Kontakt mit dem Werkstück (9, 9A) gebracht wird, wobei eine Unterseite der Basis (11) drei Schenkel (21) aufweist, die in gleichmäßigem Abstand an dem gleichen Umfang um eine Drehachse der Relativbewegungs-Einheit (12, 13, 14) herum angeordnet sind, und die drei Schenkel (21) konfiguriert sind, um eine horizontale Stellung der Basis (11) beizubehalten, wobei das Verfahren umfasst:
einen Schritt zum Bestimmen eines Gewichtes, in dem ein Gewicht des Werkstücks (9, 9A) durch Gewichtserfassungs-Vorrichtungen (25) ermittelt wird, die jeweils an den drei Schenkeln (21) vorgesehen sind; sowie
einen Schritt zum Erzeugen von Messungsdaten, in dem Messungsdaten erzeugt werden, die eine Oberflächenform des Werkstücks (9, 9A) anzeigen und die entsprechend dem Gewicht des Werkstücks (9, 9A) auf Basis des Erfassungsergebnisses des Detektors (18) sowie des in dem Schritt zum Bestimmen eines Gewichtes ermittelten Gewichtes des Werkstücks (9, 9A) korrigiert werden.

8. Verfahren zum Messen einer Oberflächenform nach Anspruch 7,
wobei die Relativbewegungs-Einheit (12, 13, 14) umfasst:
ein Luftlager (12), umfassend einen zu drehenden Körper, an dem das Werkstück (9, 9A) platziert ist, sowie einen Lagerungsabschnitt, der konfiguriert ist, um den zu drehenden Körper über eine Luftschicht (49) um die Drehachse herum drehbar zu lagern; sowie
eine Drehantriebs-Einheit (14), die konfiguriert ist, um den zu drehenden Körper zu drehen.

9. Verfahren zum Messen einer Oberflächenform, mit dem eine Oberflächenform eines Werkstücks (9, 9A) basierend auf einer Verschiebung einer Sonde (18a) gemessen wird, die durch einen Detektor (18) erfasst wird, während das Werkstück (9, 9A) durch eine Relativbewegungs-Einheit (12, 13, 14) relativ zu dem Detektor (18) in einem Zustand bewegt wird, in dem die Sonde (18a) des Detektors (18) in Kontakt mit dem Werkstück (9, 9A) gebracht wird,
wobei die Relativbewegungs-Einheit (12, 13, 14) umfasst:
ein Luftlager (12), umfassend einen zu drehenden Körper, an dem das Werkstück (9, 9A) platziert ist, sowie einen Lagerungsabschnitt, der konfiguriert ist, um den zu drehenden Körper über eine Luftschicht (49) drehbar zu lagern; wobei die Luftschicht (49) zwischen einer ersten Fläche, die an dem Lagerungsabschnitt ausgebildet ist und senkrecht zu einer Drehachse des zu drehenden Körpers ist, und einer zweiten Fläche ausgebildet wird, die an dem zu drehenden Körper ausgebildet ist und der ersten Oberfläche gegenüberliegt; sowie
eine Drehantriebs-Einheit (14), die konfiguriert ist, um den zu drehenden Körper zu drehen, und
das Verfahren umfasst:
einen Schritt zum Bestimmen eines Gewichtes, in dem ein Gewicht des Werkstücks (9, 9A) basierend auf einem Erfassungsergebnis einer Größe eines Abstandes zwischen der ersten Fläche und der zweiten Fläche ermittelt wird; sowie
einen Schritt zum Erzeugen von Messungsdaten, in dem Messungsdaten erzeugt werden, die eine Oberflächenform des Werkstücks (9, 9A) anzeigen und die entsprechend dem Gewicht des Werkstücks (9, 9A) auf Basis des Erfassungsergebnisses des Detektors (18) sowie des in dem Schritt zum Bestimmen eines Gewichtes ermittelten Gewichtes des Werkstücks (9, 9A) korrigiert werden.

## Revendications

1. Dispositif de mesure de forme de surface (10, 10A, 10B, 10C) comprenant :
un détecteur (18) configuré pour détecter un déplacement d'une sonde (18a) ;
une base (11) ; et
une unité de mouvement relatif (12, 13, 14) installée dans la base (11) et configurée pour déplacer une pièce d'usinage (9, 9A) par rapport au détecteur (18), le dispositif de mesure de forme de surface (10, 10A, 10B, 10C) configuré pour mesurer une forme de surface de la pièce d'usinage (9, 9A) selon un résultat de détection d'un déplacement de la sonde (18a) détecté par le détecteur (18) pendant un déplacement de la pièce d'usinage (9, 9A) par rapport au détecteur (18) par l'unité de mouvement relatif (12, 13, 14) dans un état où la sonde (18a) est amenée en contact avec la pièce d'usinage (9, 9A),
dans lequel le dispositif de mesure de forme de surface (10, 10A, 10B, 10C) comprend en outre :
trois pieds (21) disposés à intervalle égal sur la même circonférence autour d'un axe de rotation de l'unité de mouvement relatif (12, 13, 14) sur une surface inférieure de la base (11), les trois pieds (21) configurés pour maintenir une position horizontale de la base (11) ; et
des dispositifs de détection de poids (25) installés respectivement sur les trois pieds (21) et configurés pour détecter un poids de la pièce d'usinage (9, 9A).

2. Le dispositif de mesure de forme de surface (10, 10A, 10B, 10C) selon la revendication 1,
dans lequel l'unité de mouvement relatif (12, 13, 14) comprend :
un coussin d'air (12) comprenant un corps à tourner sur lequel la pièce d'usinage (9, 9A) est positionnée, et une partie de support configurée pour soutenir en rotation le corps à tourner via une couche (49) d'air ; et
une unité d'entraînement rotative (14) configurée pour faire tourner le corps à tourner.

3. Le dispositif de mesure de forme de surface (10, 10A, 10B, 10C) selon la revendication 2,
dans lequel la pluralité de dispositifs de détection de poids (25) est disposée autour d'un axe de rotation du corps à tourner, et
le dispositif de mesure de forme de surface (10, 10A, 10B, 10C) comprend en outre une unité de génération de données de mesure (53) configurée pour générer des données de mesure indiquant une forme de surface de la pièce d'usinage (9, 9A) et étant corrigée pour chacune des positions de rotation conformément au résultat de détection pour chacune des positions de rotation, selon le résultat de détection par le détecteur (18) et le résultat de détection par la pluralité des dispositifs de détection de poids (25) pour chaque position du corps à tourner.

4. Dispositif de mesure de forme de surface (10, 10A, 10B, 10C) comprenant :
un détecteur (18) configuré pour détecter un déplacement d'une sonde (18a) ; et
une unité de mouvement relatif (12, 13, 14) configurée pour déplacer une pièce d'usinage (9, 9A) par rapport au détecteur (18), le dispositif de mesure de forme de surface (10, 10A, 10B, 10C) configuré pour mesurer une forme de surface de la pièce d'usinage (9, 9A) selon un résultat de détection d'un déplacement de la sonde (18a) détecté par le détecteur (18) pendant un déplacement de la pièce d'usinage (9, 9A) par rapport au détecteur (18) par l'unité de mouvement relatif (12, 13, 14) dans un état où la sonde (18a) est amenée en contact avec la pièce d'usinage (9, 9A),
dans lequel le dispositif de mesure de forme de surface (10, 10A, 10B, 10C) comprend en outre un dispositif de détection de poids (25) configuré pour détecter un poids de la pièce d'usinage (9, 9A),
dans lequel l'unité de mouvement relatif (12, 13, 14) comprend :
un coussin d'air (12) comprenant un corps à tourner sur lequel la pièce d'usinage (9, 9A) est positionnée, et une partie de support configurée pour soutenir en rotation le corps à tourner via une couche (49) d'air, la couche (49) d'air étant formée entre une première surface qui est constituée dans la partie de support et est perpendiculaire à un axe de rotation du corps à tourner, et une deuxième surface qui est constituée dans le corps à tourner et est opposée à la première surface ; et
une unité d'entraînement rotative (14) configurée pour faire tourner le corps à tourner, et
dans lequel le dispositif de détection de poids (25) est configuré pour détecter le poids de la pièce d'usinage (9, 9A) selon un résultat de détection d'une taille d'une garde entre la première surface et la deuxième surface.

5. Le dispositif de mesure de forme de surface (10, 10A, 10B, 10C) selon l'une quelconque des revendications 1 à 4, comprenant en outre
une unité de génération de données de mesure (53) configurée pour générer des données de mesure indiquant une forme de surface de la pièce d'usinage (9, 9A) et étant corrigées conformément au poids de la pièce d'usinage (9, 9A), selon le résultat de détection par le détecteur (18) et le poids de la pièce d'usinage (9, 9A) détecté par le dispositif de détection de poids (25).

6. Le dispositif de mesure de forme de surface (10, 10A, 10B, 10C) selon l'une quelconque des revendications 1 à 5, comprenant en outre
une unité de contrôle d'entraînement (54) configurée pour contrôler un entraînement de l'unité de mouvement relatif (12, 13, 14) selon le poids de la pièce d'usinage (9, 9A) détecté par le dispositif de détection de poids (25) et un paramètre d'entraînement préréglé de l'unité de mouvement relatif (12, 13, 14) correspondant au poids de la pièce d'usinage (9, 9A).

7. Procédé de mesure de forme de surface, dans lequel une forme de surface d'une pièce d'usinage (9, 9A) est mesurée selon un déplacement d'une sonde (18a) détecté par un détecteur (18), pendant un déplacement de la pièce d'usinage (9, 9A) par rapport au détecteur (18) par une unité de mouvement relatif (12, 13, 14) installée dans une base (11) dans un état où la sonde (18a) du détecteur (18) est amenée en contact avec la pièce d'usinage (9, 9A), une surface inférieure de la base (11) présentant trois pieds (21) disposés à intervalle égal sur la même circonférence autour d'un axe de rotation de l'unité de mouvement relatif (12, 13, 14), les trois pieds (21) configurés pour maintenir une position horizontale de la base (11), le procédé comprenant :
une étape d'acquisition de poids d'obtention d'un poids de la pièce d'usinage (9, 9A) par des dispositifs de détection de poids (25) installés respectivement sur les trois pieds (21) ; et
une étape de génération de données de mesure de génération de données de mesure indiquant une forme de surface de la pièce d'usinage (9, 9A) et étant corrigées conformément au poids de la pièce d'usinage (9, 9A), selon le résultat de détection par le détecteur (18) et le poids de la pièce d'usinage (9, 9A) obtenu à l'étape d'acquisition de poids.

8. Le procédé de mesure de forme de surface selon la revendication 7,
dans lequel l'unité de mouvement relatif (12, 13, 14) comprend :
un coussin d'air (12) comprenant un corps à tourner sur lequel la pièce d'usinage (9, 9A) est positionnée, et une partie de support configurée pour soutenir le corps à tourner en rotation autour de l'axe de rotation via une couche (49) d'air ; et
une unité d'entraînement rotative (14) configurée pour faire tourner le corps à tourner.

9. Procédé de mesure de forme de surface, dans lequel une forme de surface d'une pièce d'usinage (9, 9A) est mesurée selon un déplacement d'une sonde (18a) détecté par un détecteur (18), pendant un déplacement de la pièce d'usinage (9, 9A) par rapport au détecteur (18) par une unité de mouvement relatif (12, 13, 14) dans un état où la sonde (18a) du détecteur (18) est amenée en contact avec la pièce d'usinage (9, 9A),
dans lequel l'unité de mouvement relatif (12, 13, 14) comprend :
un coussin d'air (12) comprenant un corps à tourner sur lequel la pièce d'usinage (9, 9A) est positionnée, et une partie de support configurée pour soutenir en rotation le corps à tourner via une couche (49) d'air, la couche (49) d'air étant formée entre une première surface qui est constituée dans la partie de support et est perpendiculaire à un axe de rotation du corps à tourner, et une deuxième surface qui est constituée dans le corps à tourner et est opposée à la première surface ; et
une unité d'entraînement rotative (14) configurée pour faire tourner le corps à tourner, et
dans lequel le procédé comprend :
Une étape d'acquisition de poids d'obtention d'un poids de la pièce d'usinage (9, 9A) selon un résultat de détection d'une taille d'une garde entre la première surface et la deuxième surface ; et
une étape de génération de données de mesure de génération de données de mesure indiquant une forme de surface de la pièce d'usinage (9, 9A) et étant corrigées conformément au poids de la pièce d'usinage (9, 9A), selon le résultat de détection par le détecteur (18) et le poids de la pièce d'usinage (9, 9A) obtenu à l'étape d'acquisition de poids.
